(19) Europäisches Patentamt
European Patent Office
Office européen des brevets

(11) **EP 4 401 001 A1**

(12) **EUROPEAN PATENT APPLICATION**
published in accordance with Art. 153(4) EPC

(43) Date of publication:
**17.07.2024 Bulletin 2024/29**

(21) Application number: **22889246.9**

(22) Date of filing: **01.11.2022**

(51) International Patent Classification (IPC):
**G06F 40/58** (2020.01)

(52) Cooperative Patent Classification (CPC):
**G06F 40/44; G06F 40/58**

(86) International application number:
**PCT/CN2022/128836**

(87) International publication number:
**WO 2023/078221 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.11.2021 CN 202111295358**

(71) Applicant: **Huawei Technologies Co., Ltd.
Shenzhen, Guangdong 518129 (CN)**

(72) Inventors:
- **YAO, Wang
  Shenzhen, Guangdong 518129 (CN)**
- **WANG, Xiao
  Shenzhen, Guangdong 518129 (CN)**
- **ZHANG, Suiyun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **LANGUAGE TRANSLATION METHOD AND ELECTRONIC DEVICE**

(57) A language translation method and an electronic device are provided, and relate to the field of terminal technologies, to improve language translation quality. The method includes: The electronic device obtains a word distribution of a translation result of a first sentence in a source language and a second sentence in the source language, and obtains a word distribution of a first translation result of the second sentence and a jump rate of a word included in the first translation result of the second sentence. Then, the electronic device determines a word distribution of a second translation result of the second sentence based on the word distribution of the translation result of the first sentence, the word distribution of the first translation result of the second sentence, and the jump rate. The second sentence includes a word in the first sentence and a first word. The jump rate is related to a first similarity. The first similarity is a similarity between the translation result of the first sentence and the first translation result of the second sentence.

FIG. 7A-1

**(Cont. next page)**

EP 4 401 001 A1

CONT.
FROM
FIG. 7A-1

Word
distribution of
the translation
result of S2

Word distribution of a
translation result of S3,
the word distribution of
the translation result of
S2, and the jump rate

Determine a target word
distribution based on the
word distribution of the
translation result of S3,
the word distribution of
the translation result of
S2, and the jump rate

p3: the word
distribution
of t2

S3: this one question will
define your professional
success more **than**

ASR
model

Text
information
of S3

NMT
model

Correction
module

t3: a translation result
(这一问题将更能定义
您的职业成功) of S3

FIG. 7A-2

t1: a translation result
(这一问题将定义您的职业成功) of S1

S1: this one question
will define your
professional success

ASR
model

NMT
model

Correction
module

Target word
distribution p1: a word
distribution of t1

Storage
module

Word distribution of the
translation result of S1

Word distribution of the
translation result of S1,
a word distribution of a
translation result of S2,
and a jump rate

Determine a target word
distribution based on the word
distribution of the translation
result of S1, the word
distribution of the translation
result of S2, and the jump rate

S2: this one question will
define your professional
success **more**

ASR
model

Text
information
of S2

NMT
model

Correction
module

Target word
distribution p2: a word
distribution of t2

Storage
module

t2: a translation result
(这一问题将更能定义
您的职业成功) of S2

TO
FIG. 7A-2

FIG. 7A-1

CONT.
FROM
FIG. 7A-1

Word
distribution of
the translation
result of S2

Word distribution of a
translation result of S3,
the word distribution of
the translation result of
S2, and the jump rate

Determine a target word
distribution based on the
word distribution of the
translation result of S3,
the word distribution of
the translation result of
S2, and the jump rate

p3: the word
distribution
of t2

S3: this one question will
define your professional
success more **than**

ASR
model

Text
information
of S3

NMT
model

Correction
module

t3: a translation result
(这一问题将更能定义
您的职业成功) of S3

FIG. 7A-2

**Description**

This application claims priority to Chinese Patent Application No. 202111295358.8, filed with the China National Intellectual Property Administration on November 3, 2021 and entitled "LANGUAGE TRANSLATION METHOD AND ELECTRONIC DEVICE", which is incorporated herein by reference in its entirety.

**TECHNICAL FIELD**

This application relates to the field of terminal technologies, and in particular, to a language translation method and an electronic device.

**BACKGROUND**

With popularization of smart devices, more users may use various smart devices in various scenarios. For example, the user may use a smart device to watch content such as a video and a live broadcast in a foreign language. In these scenarios, real-time translation is usually required, such as translation from the foreign language into corresponding Chinese. Accordingly, in these scenarios, translation performance of the smart device becomes increasingly important.

The translation performance may be reflected in a plurality of aspects. For example, the translation performance of the smart device may be reflected by timeliness, a jump rate, and accuracy of translation. Currently, a fixed neural machine translation (neural machine translation, NMT) model is used in the smart device to perform cross-language translation, and translation performance is poor.

**SUMMARY**

This application provides a language translation method and an electronic device, to improve translation performance.

To achieve the foregoing objectives, the following technical solutions are provided in embodiments of this application.

According to a first aspect, a language translation method is provided, which may be applied to a first terminal or a component (for example, a chip system) that can implement a function of the first terminal. The method includes:

The electronic device obtains a word distribution of a translation result of a first sentence in a source language and a second sentence in the source language, and obtains a word distribution of a first translation result of the second sentence and a jump rate of a word included in the first translation result of the second sentence. Then, the electronic device determines a word distribution of a second translation result of the second sentence based on the word distribution of the translation result of the first sentence, the word distribution of the first translation result of the second sentence, and the jump rate. The second sentence includes a word in the first sentence and a first word. The jump rate is related to a first similarity. The first similarity is a similarity between the translation result of the first sentence and the first translation result of the second sentence.

The word included in the first translation result includes at least a second word and a third word. A jump rate of the third word changes relative to a jump rate of the second word.

The jump rate is related to a similarity between two consecutive translation results. The similarity usually can reflect change information of a sentence structure, a word included in a sentence, and the like. Correspondingly, the jump rate related to the similarity can also reflect the change information of the sentence structure, the word included in the sentence, and the like. When a translation context or a translation task changes, the sentence structure and the word included in the sentence may change. In embodiments of this application, information that indicates a change in the sentence structure and the word in a current translation context, namely, the jump rate, can be obtained. In addition, the word distribution of the second translation result of the second sentence is determined based on the jump rate. In this way, a determined final word distribution corresponds to the current translation context (the sentence structure and the word), and translation performance is improved.

In a possible design, that the electronic device obtains a word distribution of a first translation result of the second sentence and a jump rate of a word included in the first translation result of the second sentence includes:

The electronic device inputs the word distribution of the translation result of the first sentence and the second sentence to a first model; and

the electronic device obtains the word distribution of the first translation result of the second sentence and the jump rate by using the first model.

This means that the jump rate can be parameterized by using the foregoing solution. In other words, the jump rate is considered as a variable. The variable is related to the similarity, and the similarity is related to a context. A change of the context is considered, and a context-related jump rate can be determined based on the change of the context. To be specific, in embodiments of this application, the electronic device can adapt to the context, and determine the context-related jump rate (which may be referred to as an adaptive jump rate). In other words, the jump rate is variable. Therefore, when the context changes, the electronic device can control the jump rate in real time, then determine, based on the jump rate, a word distribution corresponding to a final translation result, and balance several translation indicators, namely, timeliness, the jump rate, and accuracy, to improve quality of real-time translation as much as possible. For example, the electronic device can have a capability of dynamically changing a prefix. In this way, current translation is no longer blindly copying a result of last translation, and translation quality degradation due to a fixed prefix is reduced. For another example, the translation result can be changed in time when a jump is required, and a jump probability can be reduced when no jump is required.

In a possible design, the first model is obtained by training a training sample. The training sample includes a plurality of target-language sentences, a similarity between consecutive target-language sentences in the plurality of target-language sentences, a result of word alignment between the consecutive target-language sentences, a plurality of source-language sentences, a first label corresponding to the target-language sentence, and a second label corresponding to the source-language sentence. The first label indicates a jump rate of a word included in the target-language sentence. The second label indicates a translation result of the source-language sentence.

The first model includes a first submodel and a second submodel.

That the electronic device obtains the word distribution of the first translation result of the second sentence and the jump rate by using the first model includes:

The electronic device obtains the word distribution of the first translation result of the second sentence by using the first submodel, and obtains the jump rate by using the second submodel.

The first submodel is obtained by training a plurality of training samples. The plurality of training samples include the plurality of source-language sentences and the second label corresponding to the source-language sentence. The second label indicates the translation result of the source-language sentence.

In a possible design, the second submodel is obtained by training a plurality of training samples. The plurality of training samples include the plurality of target-language sentences, the similarity between the consecutive target-language sentences in the plurality of target-language sentences, the result of word alignment between the consecutive target-language sentences, and the first label corresponding to the target-language sentence. The first label indicates the jump rate of the word included in the target-language sentence.

In a possible design, that the electronic device determines a word distribution of a second translation result of the second sentence based on the word distribution of the translation result of the first sentence, the word distribution of the first translation result of the second sentence, and the jump rate includes: The electronic device obtains, according to the following formula, a word distribution of a $j^{th}$ word included in the second translation result of the second sentence, where the word distribution of the second translation result includes a word distribution of each word in the second translation result:

$$p'\left(t_j \middle| t_{<j}, s_{\ll i}\right) = \beta_j \times p\left(t_j \middle| t_{<j}, s_{\ll i}\right) + \left(1 - \beta_j\right) \times last\_p\left(t_j'\right)$$

Herein, $p'(t_j|t_{<j}, s_{\ll i})$ indicates the word distribution of the $j^{th}$ word included in the second translation result, $t_j'$ indicates a translation result of the $j^{th}$ word included in the first sentence, $last\_p\left(t_j'\right)$ indicates a word distribution of the $j^{th}$ word included in the translation result of the first sentence, $\beta_j$ indicates a jump rate of the $j^{th}$ word included in the first translation result, and $p(t_j|t_{<j}, s_{\ll i})$ indicates a word distribution of the $j^{th}$ word included in the first translation result.

In a possible design, the jump rate may be calculated by using the similarity. For a target word in the first translation result of the second sentence, if no word that is the same as the target word exists in the translation result of the first sentence, $\beta_j = 1-\alpha$, or if a word that is the same as the target word exists in the translation result of the first sentence, $\beta_j = 0$. $\beta_j$ is a jump rate of the target word, and $\alpha$ is the first similarity.

In a possible design, the similarity is obtained by using a semantic similarity model. A training sample of the semantic similarity model includes a plurality of sentences and a label corresponding to each sentence. The label corresponding to the sentence indicates a similarity between the sentence and a consecutive sentence.

According to a second aspect, an electronic device is provided, including:

a processing module, configured to: obtain a word distribution of a translation result of a first sentence in a source language and a second sentence in the source language, obtain a word distribution of a first translation result of the second sentence and a jump rate of a word included in the first translation result of the second sentence, and determine a word distribution of a second translation result of the second sentence based on the word distribution of the translation result of the first sentence, the word distribution of the first translation result of the second sentence, and the jump rate, where the second sentence includes a word in the first sentence and a first word; the jump rate is related to a first similarity; the first similarity is a similarity between the translation result of the first sentence and the first translation result of the second sentence; and the word included in the first translation result includes at least a second word and a third word, and a jump rate of the third word changes relative to a jump rate of the second word.

In a possible design, that the processing module is configured to obtain a word distribution of a first translation result of the second sentence and a jump rate of a word included in the first translation result of the second sentence includes: the electronic device inputs the word distribution of the translation result of the first sentence and the second sentence to a first model.

The electronic device obtains the word distribution of the first translation result of the second sentence and the jump rate by using the first model.

In a possible design, the first model is obtained by training a training sample. The training sample includes a plurality of target-language sentences, a similarity between consecutive target-language sentences in the plurality of target-language sentences, a result of word alignment between the consecutive target-language sentences, a plurality of source-language sentences, a first label corresponding to the target-language sentence, and a second label corresponding to the source-language sentence. The first label indicates a jump rate of a word included in the target-language sentence. The second label indicates a translation result of the source-language sentence.

The first model includes a first submodel and a second submodel.

That the electronic device obtains the word distribution of the first translation result of the second sentence and the jump rate by using the first model includes:

The electronic device obtains the word distribution of the first translation result of the second sentence by using the first submodel, and obtains the jump rate by using the second submodel.

The first submodel is obtained by training a plurality of training samples. The plurality of training samples include the plurality of source-language sentences and the second label corresponding to the source-language sentence. The second label indicates the translation result of the source-language sentence.

In a possible design, the second submodel is obtained by training a plurality of training samples. The plurality of training samples include the plurality of target-language sentences, the similarity between the consecutive target-language sentences in the plurality of target-language sentences, the result of word alignment between the consecutive target-language sentences, and the first label corresponding to the target-language sentence. The first label indicates the jump rate of the word included in the target-language sentence.

In a possible design, that the processing module is configured to determine a word distribution of a second translation result of the second sentence based on the word distribution of the translation result of the first sentence, the word distribution of the first translation result of the second sentence, and the jump rate includes: The electronic device obtains, according to the following formula, a word distribution of a $j^{th}$ word included in the second translation result of the second sentence, where the word distribution of the second translation result includes a word distribution of each word in the second translation result:

$$p'\left(t_j\middle|t_{<j}, s_{\ll i}\right) = \beta_j \times p\left(t_j\middle|t_{<j}, s_{\ll i}\right) + \left(1 - \beta_j\right) \times last\_p\left(t'_j\right)$$

Herein, $p'(t_j|t_{<j}, s_{\ll i})$ indicates the word distribution of the $j^{th}$ word included in the second translation result, $t'_j$ indicates a translation result of the $j^{th}$ word included in the first sentence, $last\_p\left(t'_j\right)$ indicates a word distribution of the $j^{th}$ word included in the translation result of the first sentence, $\beta_j$ indicates a jump rate of the $j^{th}$ word included in the first translation result, and $p(t_j|t_{<j}, s_{\ll i})$ indicates a word distribution of the $j^{th}$ word included in the first translation result.

In a possible design, for a target word in the first translation result of the second sentence:

if no word that is the same as the target word exists in the translation result of the first sentence, $\beta_j=1-\alpha$; or
if a word that is the same as the target word exists in the translation result of the first sentence, $\beta_j = 0$.

$\beta_j$ is a jump rate of the target word, and $\alpha$ is the first similarity.

In a possible design, the similarity is obtained by using a semantic similarity model. A training sample of the semantic similarity model includes a plurality of sentences and a label corresponding to each sentence. The label corresponding to the sentence indicates a similarity between the sentence and a consecutive sentence.

According to a third aspect, an electronic device is provided. The electronic device has a function of implementing the language translation method according to any one of the foregoing aspects and the possible implementations of the foregoing aspects. The function may be implemented by hardware, or may be implemented by hardware executing corresponding software. The hardware or the software includes one or more modules corresponding to the function.

According to a fourth aspect, a computer-readable storage medium is provided, including computer instructions. When the computer instructions are run on an electronic device, the electronic device is enabled to perform the language translation method according to any one of the foregoing aspects and the possible implementations of the foregoing aspects.

According to a fifth aspect, a computer program product is provided. When the computer program product runs on an electronic device, the electronic device is enabled to perform the language translation method according to any one of the foregoing aspects and the possible implementations of the foregoing aspects.

According to a sixth aspect, a circuit system is provided. The circuit system includes a processing circuit. The processing circuit is configured to perform the language translation method according to any one of the foregoing aspects and the possible implementations of the foregoing aspects.

According to a seventh aspect, an electronic device is provided, including one or more processors and one or more memories. The memory stores one or more programs. When the one or more programs are executed by the processor, the electronic device is enabled to perform the method according to any one of the foregoing aspects and the possible implementations of the foregoing aspects.

According to an eighth aspect, a chip system is provided, including at least one processor and at least one interface circuit. The at least one interface circuit is configured to: perform a transceiver function, and send instructions to the at least one processor. When the at least one processor executes the instructions, the at least one processor performs the language translation method according to any one of the foregoing aspects and the possible implementations of the foregoing aspects.

## BRIEF DESCRIPTION OF DRAWINGS

FIG. 1 to FIG. 3 are schematic diagrams of a language translation method;
FIG. 4 and FIG. 5 are schematic diagrams of an electronic device according to an embodiment of this application;
FIG. 6 is a schematic diagram of a software architecture of an electronic device according to an embodiment of this application;
FIG. 7A-1 and FIG. 7A-2 are a schematic diagram of a language translation method according to an embodiment of this application;

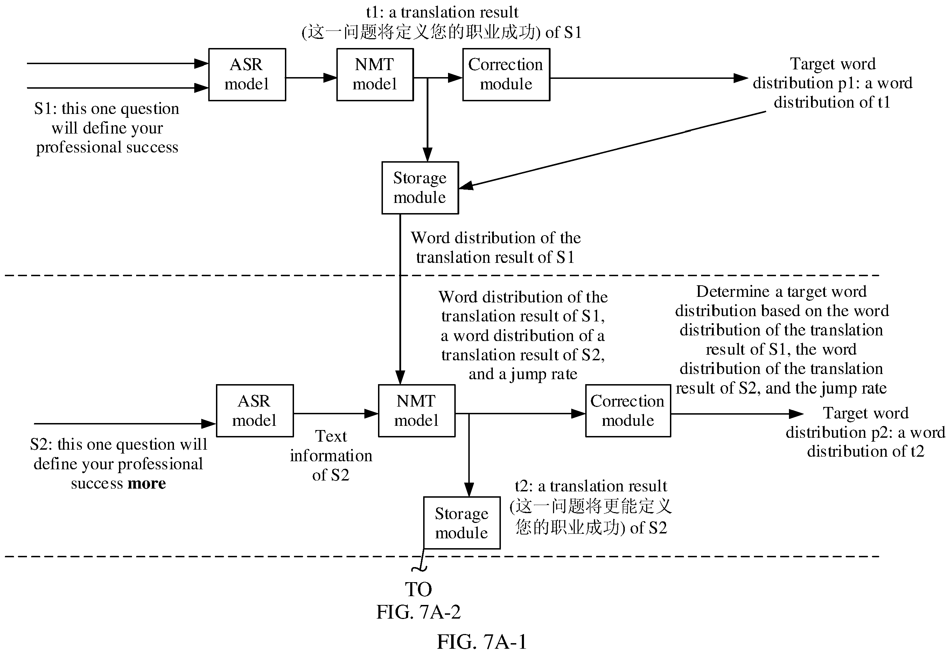

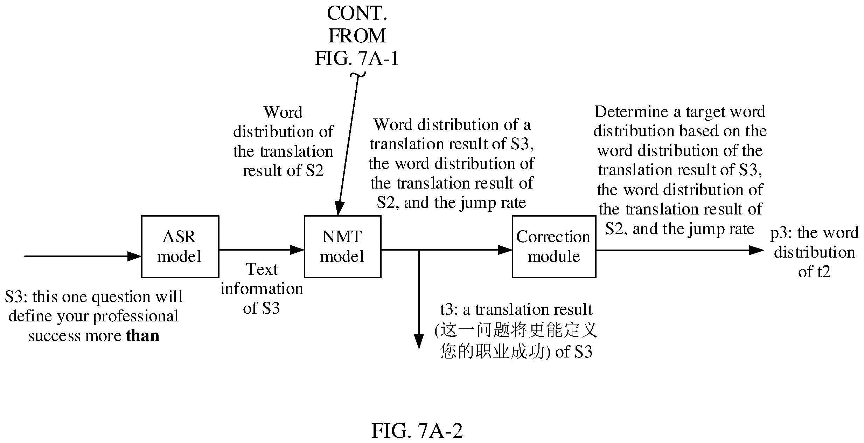

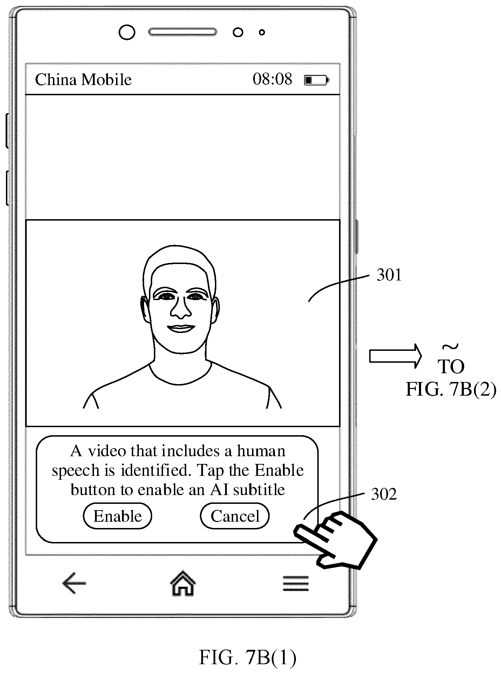

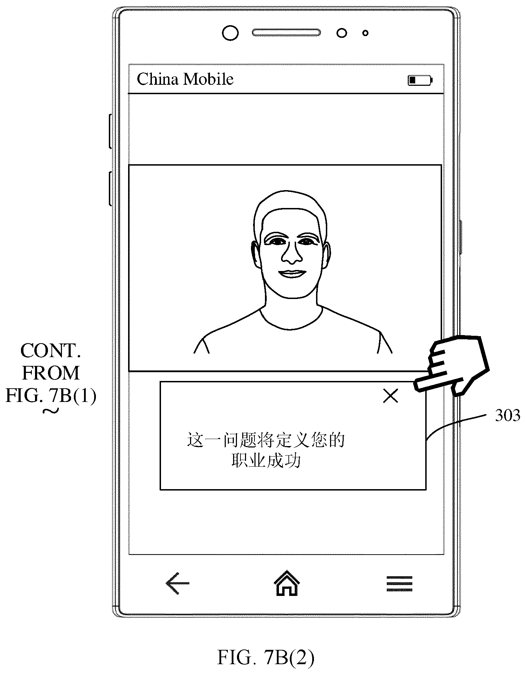

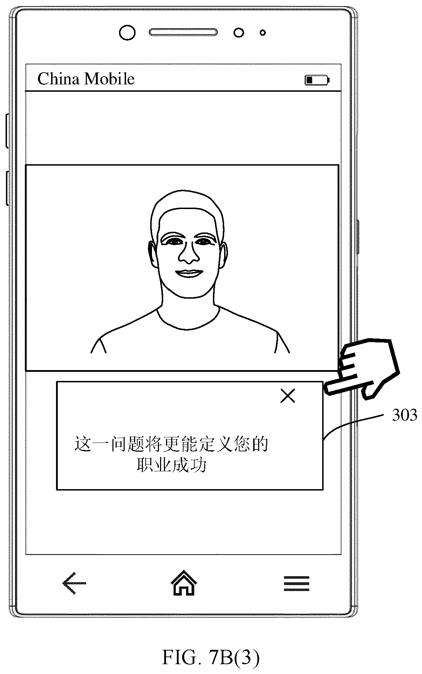

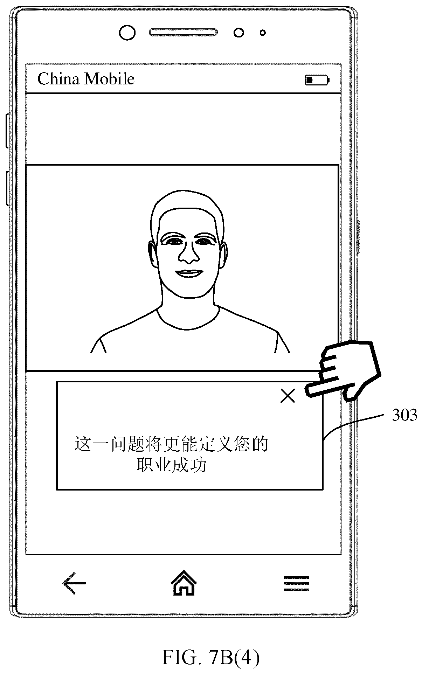

FIG. 7B(1) to FIG. 7B(4) are a schematic diagram of a group of interfaces according to an embodiment of this application;

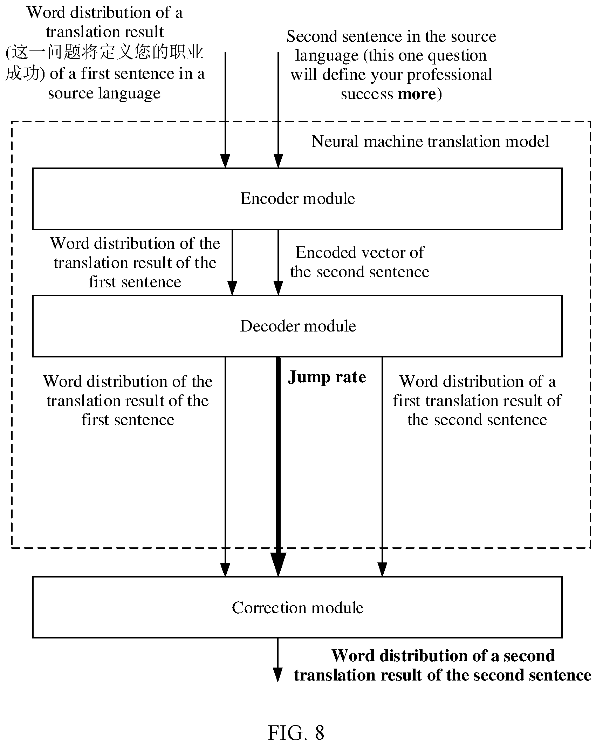

FIG. 8 is a schematic diagram of a model according to an embodiment of this application;

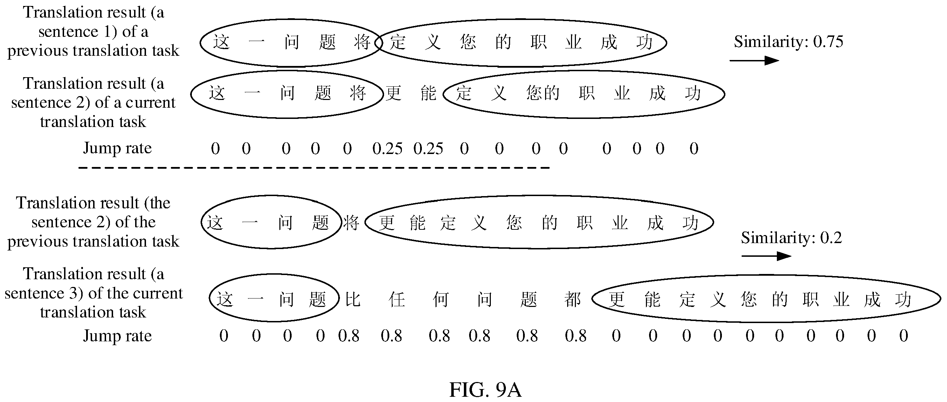

FIG. 9A is a schematic diagram of a jump rate calculation principle according to an embodiment of this application;

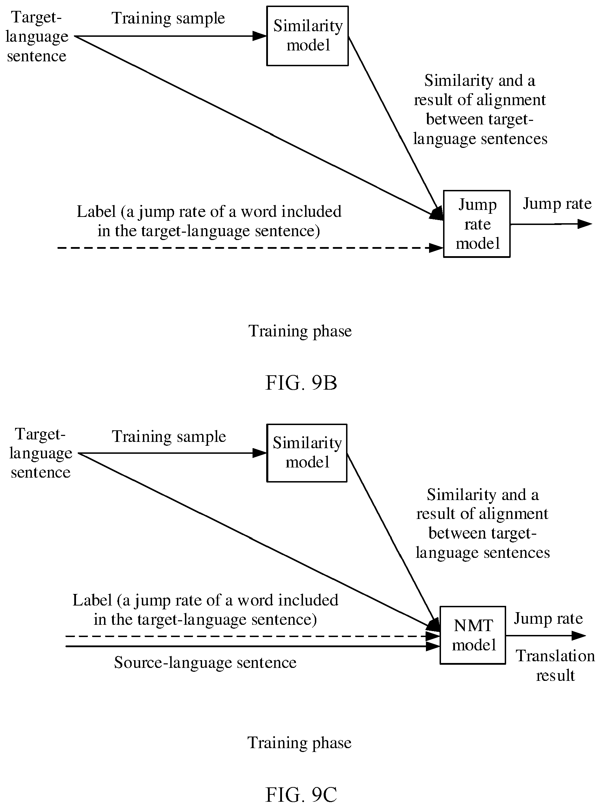

FIG. 9B and FIG. 9C are schematic diagrams of a model training method according to an embodiment of this application;

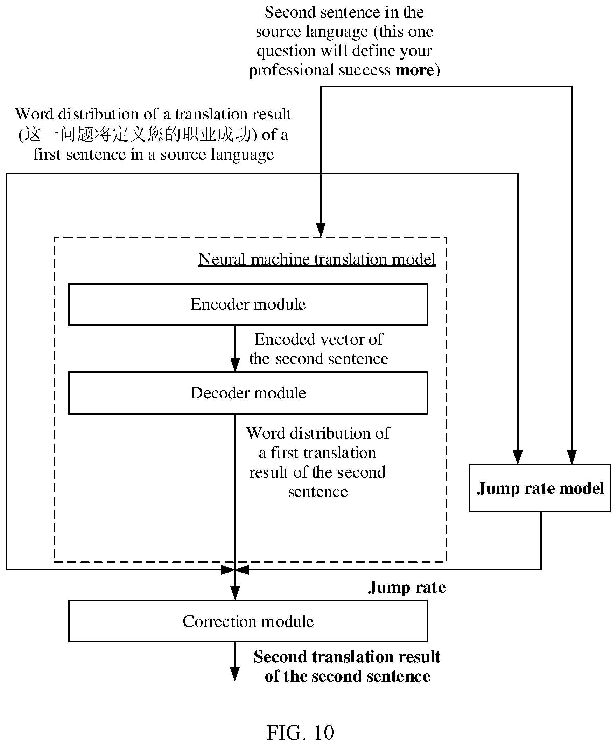

FIG. 10 is a schematic diagram of a model according to an embodiment of this application;

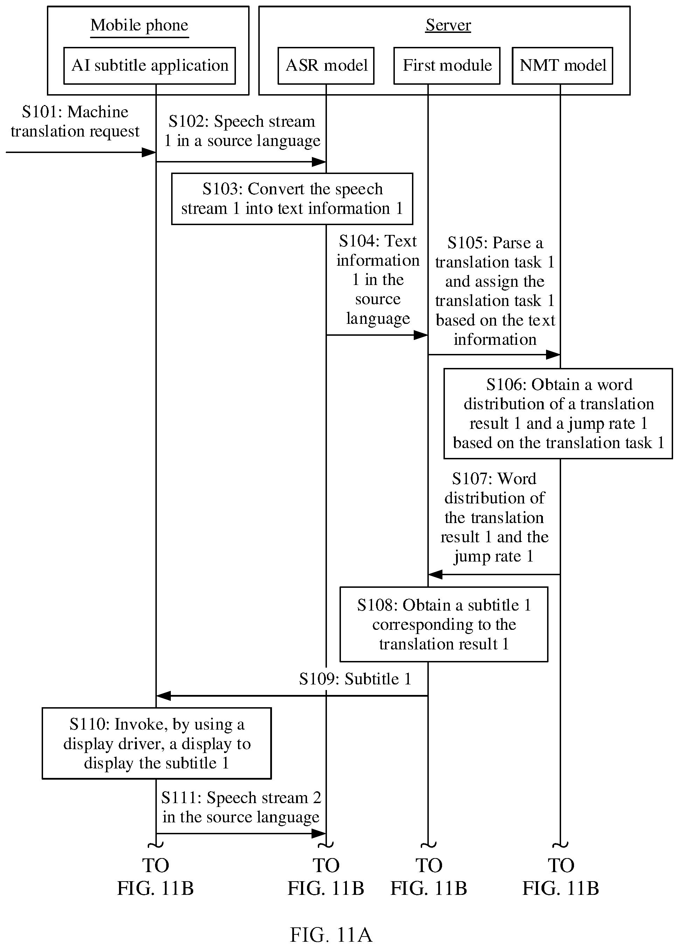

FIG. 11A to FIG. 13 are schematic diagrams of a language translation method according to an embodiment of this application;

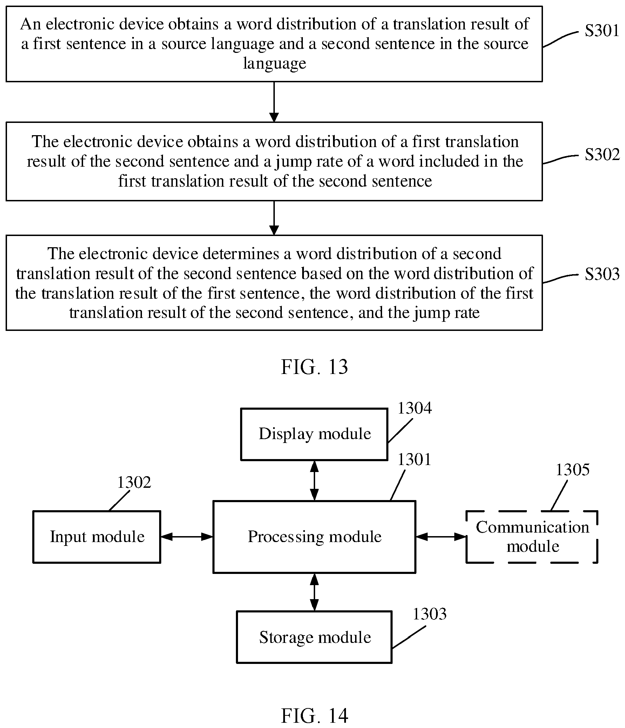

FIG. 14 is a schematic diagram of an apparatus according to an embodiment of this application; and

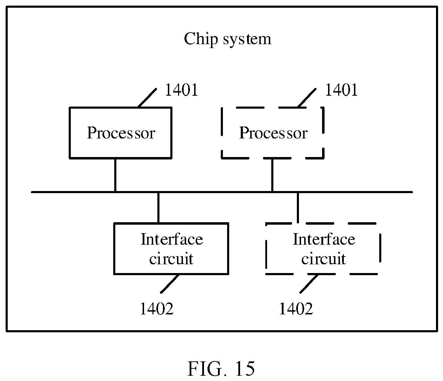

FIG. 15 is a schematic diagram of a chip system according to an embodiment of this application.

## DESCRIPTION OF EMBODIMENTS

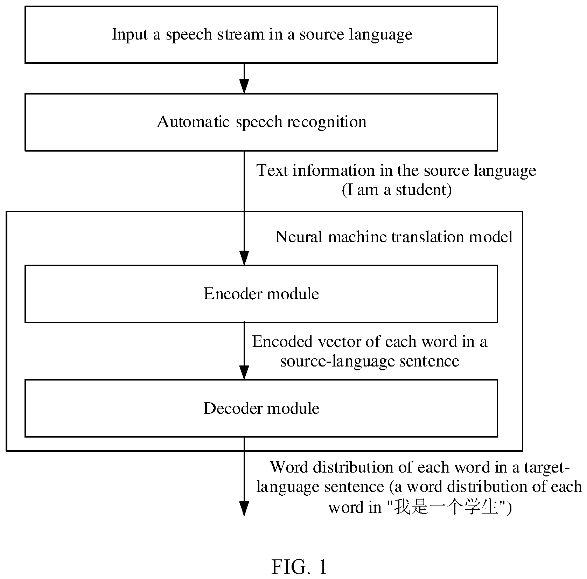

FIG. 1 shows a language translation method. For example, a mobile phone performs translation. The mobile phone collects a speech stream in a source language and inputs the speech stream in the source language to an automatic speech recognition (automatic speech recognition, ASR) model. The ASR model recognizes the speech stream in the source language and converts the speech stream in the source language into a text in the source language (or referred to as a source-language sentence or a source language sequence). Then, the ASR model outputs the text in the source language to an NMT model. The NMT model translates the text in the source language into a text in a target language. The NMT model includes an encoder (encoder) module and a decoder (decoder) module. The encoder module is configured to: encode the text in the source language to obtain an encoded vector corresponding to the text in the source language, and output the encoded vector to the decoder module. The decoder module is configured to decode the encoded vector from the encoder module, that is, convert (or translate) the vector into a text in a target language. For example, the mobile phone inputs a collected English speech stream "I am a student" to the ASR model, the ASR model converts the speech stream into a corresponding text, and outputs the text to the encoder module, and the encoder module encodes the text to obtain an encoded vector corresponding to the text in the source language. The text in the source language includes a plurality of words (or referred to as vocabularies, or referred to as "characters"). The encoded vector corresponding to the text in the source language includes an encoded vector of each word in the text. For example, an encoded vector corresponding to the word "student" in the text is [0.5, 0.2, -0.1, -0.3, 0.4, 1.2]. After obtaining the encoded vector corresponding to each word in the text in the source language, the encoder module outputs the encoded vector of each word to the decoder module.

The decoder module processes the encoded vector of each word in the source language to obtain a target-language sentence (or referred to as text information in a target language, a target language text, a target language sequence, or a translation result). The target-language sentence includes J words. Each word corresponds to one probability distribution. The probability distribution may be in a vector form.

A probability distribution of a $j^{th}$ word in the target-language sentence is $p(t_j|t_{<j}, s_{«i}) = softmax(w)$.

Herein, w indicates a score of each possible output word, and *softmax(w)* indicates normalization processing performed on each score.

For example, the decoder module processes the source-language sentence "I am a student", and outputs the following probability distributions: [0.04, 0.21, 0.05, 0.70], [0.04, 0.21, 0.1, 0.65], [0.04, 0.11, 0.15, 0.70], [0.14, 0.11, 0.05, 0.70], [0.04, 0.51, 0.05, 0.40], and [0.04, 0.21, 0.45, 0.30].

There are four elements in the probability distribution [0.04, 0.21.0.05, 0.70]. Each element indicates one probability. The probability indicates a probability that the $j^{th}$ word in the target-language sentence may be a word corresponding to the probability. In a vector indicated by the probability distribution, a sum of values (namely, the probabilities) of the elements is 1. Herein, 0.04 indicates that a probability that a $1^{st}$ word in the target language sentence may be "x1" is 0.04; 0.21 indicates that a probability that the $1^{st}$ word in the target-language sentence may be "y1" is 0.21; 0.05 indicates that a probability that the $1^{st}$ word in the target-language sentence may be "z1" is 0.05; and 0.7 indicates that a probability that a $1^{st}$ word in the target-language sentence may be "我" is 0.7. The probability of the word "我" is highest. Therefore, the $1^{st}$ word in the target-language sentence is determined as "我".

Similarly, in the probability distribution [0.04, 0.21.0.1, 0.65], 0.04 indicates that a probability that a $2^{nd}$ word in the target-language sentence may be a word "x2" is 0.04; 0.21 indicates that a probability that the $2^{nd}$ word in the target-language sentence may be a word "y2" is 0.21; 0.1 indicates that a probability that the $2^{nd}$ word in the target-language sentence may be a word "z2" is 0.1; and 0.65 indicates that a probability that the $2^{nd}$ word in the target-language sentence may be "是" is 0.65. The probability of the word "是" is highest. Therefore, the $2^{nd}$ word in the target-language sentence is determined as "是". By analogy, each word included in the target-language sentence may be determined, to complete a translation task of translating the source-language sentence into the target-language sentence.

For the $j^{th}$ word in the target language sentence, the probability distribution corresponding to the word may also be referred to as a word distribution corresponding to the word.

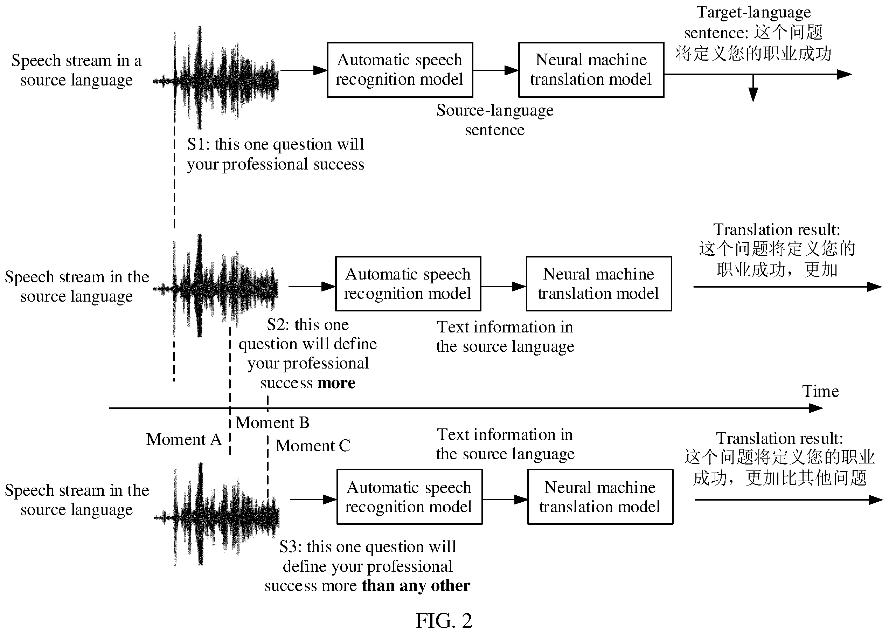

In some solutions, each time a piece of speech information is added to the speech stream collected by the electronic device, the speech information is input to the ASR model, and is processed by the ASR model and the NMT model, to obtain a translation result corresponding to the speech information, until the speech stream ends. FIG. 2 is used as an example. Currently, the mobile phone is playing an English video. The mobile phone collects an English speech stream of a speaker in the video in real time. At a moment A, a speech stream S1 collected by the mobile phone is " this one question will define your professional success". The mobile phone inputs the English speech stream S1 to an ASR model. After being processed by the ASR model and the NMT model, the English speech stream S1 is translated into a corresponding Chinese sentence "这个问题将定义您的职业成功". At a moment B, the mobile phone continues to collect new speech information of the speaker. After collecting an English word "more", the mobile phone inputs the English word (the English word and the speech stream S1 form a speech stream S2) to the ASR model. After being processed by the ASR model and the NMT model, the English speech stream S2 is translated. In an example, the NMT model translates a new word on a basis of copying a last translation result (a translation result of S1). In other words, when translating the English speech stream S2, the NMT model reuses the translation result "这个问题将定义您的职业成功" of S1, obtains a translation result (更加) of the newly input word "more", and then splices the translation result of S1 and the translation result of the newly input word "more" to obtain a translation result "这个问题将定义您的职业成功，更加" of the English speech stream S2. Similarly, when translating an English speech stream S3, the NMT model splices the translation result of S2 and a translation result of newly input words "than any other" to obtain a translation result "这个问题 将定义您的职业成功，更加比其他问题" of S3. In this implementation, the mobile phone can split a translation process of one sentence into a plurality of translation tasks, and separately process the plurality of translation tasks. Translation can be performed in advance without waiting for a complete English sentence to be detected. Compared with a solution in which translation is started only when a complete English sentence is detected, the technical solution corresponding to FIG. 2 can reduce translation duration and improve translation timeliness. However, in translation at a time, a translation result of a new word is spliced on a basis of copying a last translation result, a final translation result is not easily understood by a user, or even a problem, for example, translation inaccuracy, may exist.

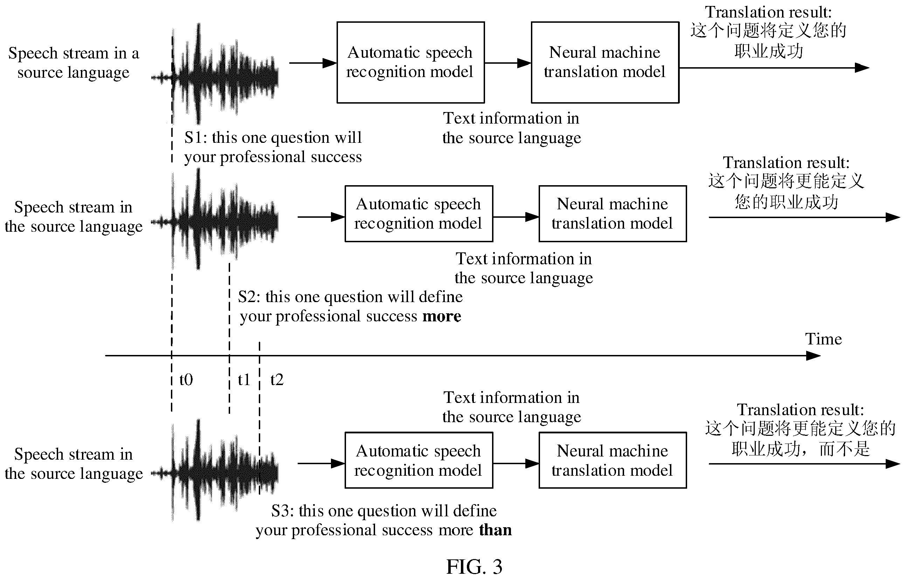

In some other examples, a translation process of one sentence is split into a plurality of translation tasks. The NMT model does not consider a last translation result, and translates only speech information of a current translation task. FIG. 3 is used as an example. A translation process of an English sentence "this one question will define your professional success more than any other" may be split into a plurality of translation tasks, including an S2 translation task and an S3 translation task. When translating an English speech stream S2, the NMT model does not consider a translation result of S1, and directly translates the English speech stream S2 to obtain a translation result "这个问题将更能定义您的职业成功". Similarly, when translating an English speech stream S3, the NMT model does not consider the translation result of S2, and directly translates S3 to obtain a translation result "这个问题将更能定义您的职业成功，而不是" of S3. In this implementation, a current translation result overwrites a last translation result. In this way, a jump rate between two consecutive translation results is high. A translation result changes repeatedly, and consequently, the user needs to re-read and re-understand a changed translation result. This brings inconvenience to the user and deteriorates user experience.

To resolve the foregoing problem and improve translation performance, embodiments of this application provide a language translation method. The technical solutions in embodiments of this application may be applied to various scenarios, for example, including but not limited to scenarios in which semantic translation needs to be performed on, for example, a video, a live broadcast, an audio, a video conference, and a video presentation. The technical solutions in embodiments of this application may be applied to an electronic device having a translation function. For example, the electronic device may be a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, or an intelligent vehicle. A specific form of the electronic device is not specifically limited in this application.

In the specification and the accompanying drawings of this application, the terms such as "first" and "second" are used to distinguish between different objects, or are used to distinguish between different processing performed on a same object. Words such as "first" and "second" may distinguish between the same or similar items having basically the same functions and effects. For example, a first device and a second device are merely intended to distinguish between different devices, and do not limit a sequence thereof. A person skilled in the art may understand that the words such as "first" and "second" do not limit a quantity or an execution sequence, and the words such as "first" and "second" do not indicate a definite difference. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In addition, the terms "including", "having", or any other variant thereof in the descriptions of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in embodiments of this application, a word "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" is intended to present a related concept in a specific manner.

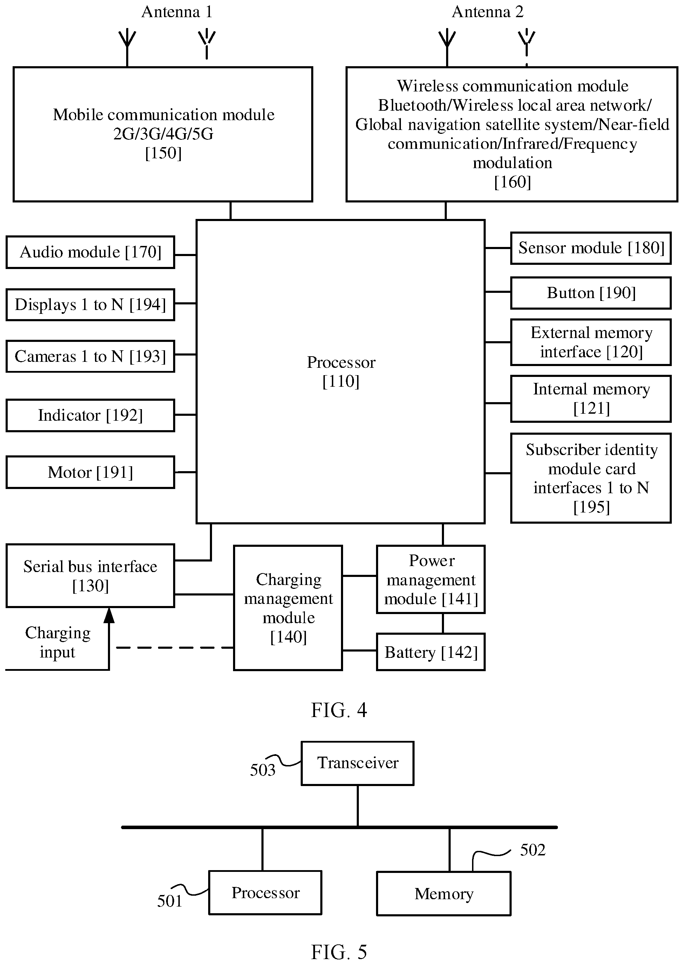

For example, the electronic device is a mobile phone. FIG. 4 is a schematic diagram of a structure of the electronic device.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, or combine some of the components, or split some of the components, or have different arrangements of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data.

In some embodiments, the processor 110 may include one or more interfaces.

It may be understood that an interface connection relationship between the modules that is shown in embodiments of the present invention is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device and that includes wireless communication such as 2G/3G/4G/5G/6G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the electronic device and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology.

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include one or N cameras 193, where N is a positive integer greater than 1.

The digital signal processor is configured to process a digital signal, and may further process another digital signal in addition to the digital image signal. For example, when the electronic device selects a frequency, the digital signal processor is configured to perform Fourier transform on frequency energy.

The video codec is configured to compress or decompress a digital video. The electronic device may support one or more types of video codecs. In this way, the electronic device can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device may be implemented by using the NPU, for example, image recognition, facial recognition, speech recognition, and text understanding.

The external memory interface 120 may be configured to connect to an external storage card, for example, a micro SD card, to extend a storage capability of the electronic device. The external memory card communicates with the processor 110 through the external memory interface 120, to implement a data storage function.

The internal memory 121 may be configured to store computer-executable program code. The executable program code includes instructions. The internal memory 121 may include a program storage region and a data storage region. The program storage region may store an operating system, an application required by at least one function (for example, a voice playing function or an image playing function), and the like. The data storage region may store data (for example, audio data and a phone book) created during use of the electronic device, and the like. In addition, the internal memory 121 may include a high-speed random-access memory, and may further include a non-volatile memory, for example, at least one magnetic disk storage component, a flash memory component, and a universal flash storage (universal flash storage, UFS). The processor 110 runs the instructions stored in the internal memory 121 and/or the instructions stored in the memory disposed in the processor, to execute various function applications of the electronic device and data processing.

In some embodiments of this application, the memory of the electronic device stores a machine translation model. The machine translation model includes an ASR module, an encoder module, a decoder module, an output module, and a correction module. For a technical implementation and usage of each module, refer to the following descriptions. The machine translation model is used to translate speech information in a source language into a translation result in a target language. Optionally, the electronic device may further process the translation result into a subtitle, and display the subtitle in the target language on the display.

The electronic device may implement an audio function by using the audio module 170, the speaker 170A, the receiver 170B, the microphone 170C, the headset jack 170D, the application processor, and the like, for example, music playing and sound recording.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device may be for listening to music or answering a hands-free call through the speaker 170A.

The receiver 170B, also referred to as an "earpiece", is configured to convert an electrical audio signal into a sound signal. When a call is answered or voice information is listened to by using the electronic device, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and further implement a noise reduction function. In some other embodiments, three, four, or more microphones 170C may alternatively be disposed in the electronic device, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device may receive a button input, and generate a button signal input related to user settings and function control of the electronic device.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

For example, the mobile phone is merely used as an example to describe the structure of the electronic device in this embodiment of this application, but does not constitute a limitation on the structure and a form of the electronic device. The structure and the form of the electronic device are not limited in embodiments of this application. For example, FIG. 5 shows another example structure of the electronic device. As shown in FIG. 5, the electronic device includes a processor 501, a memory 502, and a transceiver 503. For implementations of the processor 501 and the memory 502, refer to implementations of the processor and the memory of the electronic device. The transceiver 503 is configured for interaction between the electronic device and another device (for example, an electronic device). The transceiver 503 may be a component based on a communication protocol, for example, Wi-Fi or Bluetooth.

In some other embodiments of this application, the electronic device may include more or fewer components than those shown in the figure, or combine some of the components, or split some of the components, or replace some of the components, or have different arrangements of the components. The components shown in the figure may be implemented by hardware, software, or a combination of software and hardware.

A software system of the electronic device may use a layered architecture, an event-driven architecture, a microkernel architecture, a micro service architecture, or a cloud architecture. In this embodiment of the present invention, an Android® system of a layered architecture is used as an example to illustrate a software structure of the electronic device.

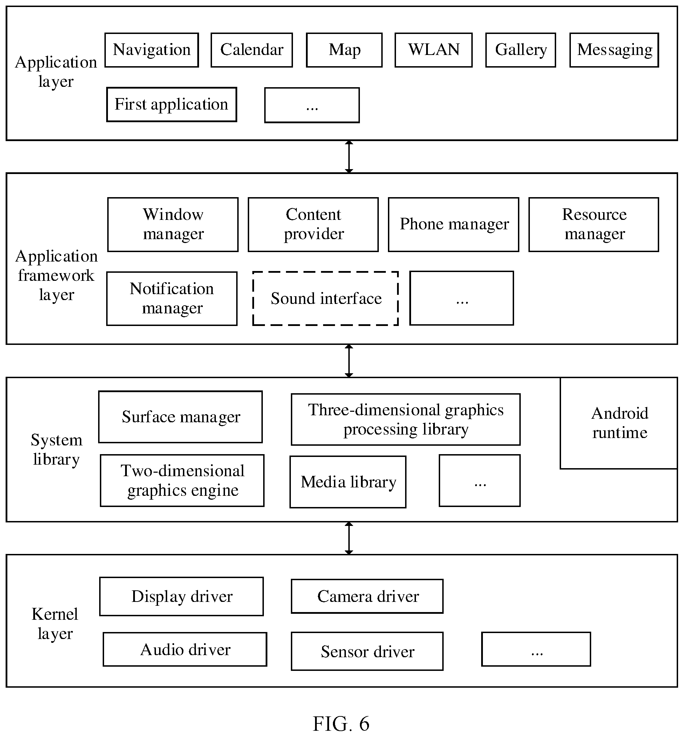

FIG. 6 is a block diagram of the software structure of the electronic device according to an embodiment of the present invention.

In the layered architecture, software is divided into several layers. Each layer has a clear role and task. The layers communicate with each other through a software interface. In some embodiments, the Android system is divided into four layers: an application layer, an application framework layer, an Android runtime (Android runtime) and a system library, and a kernel layer from top to bottom.

The application layer may include a series of application packages.

As shown in FIG. 6, the application package may include applications such as Calendar, Map, WLAN, Messaging, Gallery, Navigation, and a first application.

In some embodiments of this application, the first application includes a speech-related application. The speech-related application may output a speech (for example, play a speech through the electronic device) or input a speech to the electronic device (for example, in a video recording scenario, a camera application may invoke a microphone by using a corresponding driver, to collect speech information of a user). The first application may be, but is not limited to, for example, Video, Camera, Music, or Phone.

The first application may be a pre-installed application or an application downloaded from a third-party application store. A specific implementation of the first application is not limited in embodiments of this application.

In some embodiments of this application, an audio may be output or input by using some of these applications. When detecting the audio, the electronic device may translate some content (for example, a speech of a person speaking in the audio (a human speech for short)) in the audio by using an ASR technology. Optionally, the electronic device may further convert a translation result into a subtitle, and display the subtitle on a display.

For example, the user watches a network video. The user may watch the network video by using a browser, a video player (for example, Youku® or iQIYI®), or another application (for example, watch a video pushed from Weibo® or WeChat®). The electronic device may detect speech information in the video, and perform cross-language translation on the speech information.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, and the like.

In some embodiments of this application, the framework layer further includes a sound interface (or referred to as a sound module), configured to detect a sound input to the electronic device or a sound output by the electronic device.

Optionally, the framework layer may further include another interface or module required for implementing the technical solutions in embodiments of this application.

The window manager is used to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and answered, a browsing history and a bookmark, a phone book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is used to provide a communication function of the electronic device, for example, management of a call status (including answering or declining).

The resource manager provides various resources such as a localized character string, an icon, an image, a layout file, and a video file for an application.

The notification manager enables an application to display notification information in the status bar, and may be used to convey a notification message. The notification manager may automatically disappear after a short stay, without requiring a user interaction. For example, the notification manager is used to notify download completion, provide a message notification, and the like. The notification manager may alternatively be a notification that appears in a top status bar of the system in a form of a graph or a scroll bar text, for example, a notification of an application that is run on the background, or may be a notification that appears on a screen in a form of a dialog window. For example, text information is displayed in the status bar, a prompt tone is played, or an indicator light blinks.

The Android runtime includes a kernel library and a virtual machine. The Android runtime is responsible for scheduling and management of the Android system.

The kernel library includes two parts: a function that needs to be called in a Java language and a kernel library of Android.

The application layer and the application framework layer run on the virtual machine. The virtual machine executes Java files at the application layer and the application framework layer as binary files. The virtual machine is used to implement functions such as object lifecycle management, stack management, thread management, security and exception management, and garbage collection.

The system library may include a plurality of functional modules such as a surface manager (surface manager), a media library (Media Library), a three-dimensional graphics processing library (for example, OpenGL ES), and a 2D graphics engine (for example, an SGL).

The surface manager is used to manage a display subsystem and provide fusion of 2D and 3D layers for a plurality of applications.

The media library supports playback and recording of audios and videos in a plurality of commonly used formats, static image files, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

All technical solutions in the following embodiments may be implemented in apparatuses with the structures shown in FIG. 4 and FIG. 5.

Embodiments of this application provide a language translation method. For example, an artificial intelligence (artificial intelligence, AI) subtitle function is enabled on a mobile phone, and an English video is being played. The mobile phone collects an English speech stream of a speaker in the English video in real time, converts the English speech stream into a Chinese subtitle, and displays the Chinese subtitle on a display.

As shown in FIG. 7A-1 and FIG. 7A-2, it is assumed that the mobile phone has collected an English speech stream S1 and completed translation of the English speech stream S1 (it is assumed that a translation result of S1 is "这个问题将定义您的职业成功"), obtained a word distribution of the translation result of S1, and stored the translation result of S1 and the word distribution of the translation result of S1 in a storage module (for example, a memory or a cache). The mobile phone continues to collect new speech information of the speaker in the English video in real time. For example, as shown in FIG. 7A-1 and FIG. 7A-2, at a moment, the mobile phone collects an English word "more" said by the speaker. In this case, the mobile phone may input an English speech stream S2 (formed by the English speech stream S1 and the new word "more") and a last translation result (namely, the translation result of the English speech stream S1) to an ASR model. The ASR model converts the English speech stream S2 into text information corresponding to S2, and transfers the text information corresponding to S2 to an NMT model. The ASR model may further transfer the translation result of S1 to the NMT model.

Correspondingly, after receiving the text information of S2 and the translation result of S1 from the ASR model, the NMT model processes the text information of S2 to obtain a translation result of S2 (for example, a Chinese translation result) and obtain a word distribution of the translation result of S2. In addition, the NMT model may process the translation result of S1 to obtain the word distribution of the translation result of S1. The NMT model may also obtain a jump rate of a word included in the translation result of S1. Then, the NMT model may transfer, to a correction module, the word distribution of the translation result of S2, the word distribution of the translation result of S1, and a jump rate between the translation result of S1 and the translation result of S2.

Correspondingly, the correction module may determine a word distribution (which may be referred to as a target word distribution) of a final translation result of S2 based on the word distribution of the translation result of S2, the word distribution of the translation result of S1, and the jump rate of the word included in the translation result of S1.

Because a machine translation process is dynamic, when a translation context (or referred to as a translation task) changes, a jump rate between two consecutive translation results also changes accordingly. As a result, a target word distribution determined based on the jump rate also changes accordingly. In other words, a jump rate of a word included in a current translation result in a current translation context can be obtained based on the current translation context, and a target word distribution that corresponds to the context can be adaptively generated based on the jump rate.

FIG. 7A-1 and FIG. 7A-2 are still used as an example. When translating the English speech stream S2, the mobile phone obtains the jump rate of the word included in the translation result of S1, and determines, based on the jump rate, that the target word distribution is the word distribution of the translation result of S2 (a word distribution of the current translation result), namely, a word distribution corresponding to "这一问题将更能定义您的职业成功". When translating an English speech stream S3, the mobile phone obtains a jump rate of a word included in a translation result of S3, and determines, based on the jump rate, that a target word distribution is the word distribution of the translation result of S2 (a word distribution of a last translation result), namely, the word distribution corresponding to "这一问题将更能定义您的职业成功".

For example, as shown in FIG. 7B(1), a user currently uses a mobile phone to watch an English video. After detecting speech information of a speaker in the English video, the mobile phone may display a pop-up window 302 in a video playing window 301 to prompt the user to enable an AI subtitle function. After detecting that the user taps an "Enable" option in the pop-up window 302, the mobile phone may enable the AI subtitle function to translate the English speech information of the speaker in the English video. In three translation tasks, Chinese subtitles generated by the mobile phone are respectively shown in FIG. 7B(2) to FIG. 7B(4). A word distribution used to generate the Chinese subtitle shown in FIG. 7B(2) may be, for example, a target word distribution p1 shown in FIG. 7A-1 and FIG. 7A-2. A word distribution used to generate the Chinese subtitle shown in FIG. 7B(3) may be, for example, a target word distribution p2 shown in FIG. 7A-1 and FIG. 7A-2. A word distribution used to generate the Chinese subtitle shown in FIG. 7B(4) may be, for example, a target word distribution p3 shown in FIG. 7A-1 and FIG. 7A-2.

It can be learned that a target word distribution (for example, a word distribution used to generate a Chinese subtitle) is no longer a fixed word distribution, for example, is no longer fixed as a word distribution of a last translation result, or fixed as a word distribution of a current translation result, but may change with a translation context (a jump rate changes accordingly). A non-fixed target word distribution is obtained.

In some embodiments, the text information of the English speech stream S2 may be referred to as a second sentence. Text information of the English speech stream S1 may be referred to as a first sentence. With reference to the accompanying drawings, the following describes a function, an implementation, and specific application of the machine translation model provided in embodiments of this application.

Optionally, FIG. 8 shows a framework of the NMT model and the correction module according to an embodiment of this application.

The NMT model includes an encoder module and a decoder module.

The encoder module is used to obtain a second sentence in a source language and a word distribution of a translation result of a first sentence in the source language, and process the first sentence to obtain an encoded vector corresponding to the first sentence. The encoder module is further used to output the encoded vector and the word distribution of the translation result of the first sentence to the decoder module.

The decoder module is connected to an output end of the encoder module, and is used to receive the encoded vector from the encoder module, and process the encoded vector to obtain a word distribution of a first translation result of the second sentence. The decoder module is further used to determine based on the word distribution of the translation result of the first sentence and an encoded vector of the second sentence, a jump rate of a word included in the first translation result.

In a possible implementation, the NMT model may be referred to as a first model.

A functional module in this application further includes the correction module. The correction module is used to obtain the word distribution of the translation result of the first sentence, the word distribution corresponding to the first translation result of the second sentence, and the jump rate, and determine a corrected word distribution, namely, a word distribution of a second translation result of the second sentence, based on the word distribution corresponding to the translation result of the first sentence, the word distribution corresponding to the first translation result of the second sentence, and the jump rate. The word distribution of the second translation result of the second sentence is used as a word distribution finally obtained in a current translation task, namely, a word distribution of a final translation result of the second sentence.

Optionally, in embodiments of this application, there is a correlation between the jump rate of the word included in the first translation result of the second sentence and a similarity (which may be referred to as a first similarity) between the translation result of the first sentence and the first translation result of the second sentence. For example, a higher similarity indicates a smaller jump rate.

First, a concept of a similarity between sentences is described. The similarity may indicate a degree of difference between the sentences. A higher similarity between the sentences indicates a lower degree of difference. A lower the similarity between the sentences indicates a higher degree of difference.

In a possible implementation, when calculating the similarity between the sentences, an electronic device first obtains a translation result of a last sentence and a translation result of a current sentence, searches for a longest consecutive character string in the translation result of the last sentence, searches for a longest consecutive character string in the translation result of the current sentence, and aligns the corresponding maximum consecutive strings. Then, the electronic device inputs the longest consecutive character string in the translation result of the last sentence and the longest consecutive character string in the translation result of the current sentence to a semantic similarity model for similarity calculation. A training sample of the semantic similarity model includes corresponding translation results in a plurality of translation tasks and a label corresponding to the translation result. The label of the translation result indicates a similarity between the translation result and a last translation result.

In an embodiment of this application, a manner of training a model by using the label is referred to as a supervised learning manner.

For example, as shown in FIG. 9A, in a translation task, a translation result of the current translation task is "这一问题将更能定义您的职业成功", and a translation result of a last translation task is "这个问题将定义您的职业成功". The electronic device separately searches for longest consecutive character strings in the two translation results, and aligns the longest consecutive character strings. Aligned words (or referred to as tokens) are circled by using ellipses. The electronic device invokes the semantic similarity model. The semantic similarity model determines, through calculation, that a similarity between the translation result of the current translation task and the translation result of the last translation task is 0.75.

For another example, as shown in FIG. 9A, in a translation task, a translation result of the current translation task is "这一问题将比任何问题都更能定义您的职业成功", and a translation result of a last translation task is "这个问题将更能定义您的职业成功". The electronic device separately searches for longest consecutive character strings in the two translation results. The semantic similarity model determines, through calculation, that a similarity between the translation result of the current translation task and the translation result of the last translation task is 0.2.

FIG. 9B shows a method for training the similarity model. A training sample of the similarity model is a plurality of sentences and a label corresponding to the sentence. The label indicates a similarity between the sentences. For example, the training sample includes a sentence 1 to a sentence 3 shown in FIG. 9A. Optionally, the training sample may further include a similarity between the sentence 1 and the sentence 2, and a similarity between the sentence 2 and the sentence 3. After training, two sentences are input to the similarity model. The similarity model can output a similarity between the two sentences.

In an embodiment of this application, a jump rate model may be trained based on the semantic similarity model, and used to calculate and output a jump rate related to the similarity between sentences.

The following first describes a principle of calculating the jump rate. In a possible implementation, for a target word in the first translation result of the second sentence, if no word that is the same as the target word exists in the translation result of the first sentence, $\beta_j = 1-\alpha$, or if a word that is the same as the target word exists in the translation result of the first sentence, $\beta_j = 0$. $\beta_j$ is a jump rate of the target word, and $\alpha$ is the first similarity. In other words, for a word that is not aligned in the current translation result, a jump rate of the word is $1-\alpha$. For a word that is aligned in the current translation result, a jump rate of the word is denoted as 0.

For example, still as shown in FIG. 9A, a translation result is "这一问题更能定义您 的职业成功", and a last translation result of the translation result is "这一问题将定义您的职业 成功". If a similarity between the two translation results is 0.75, the jump rate of the two words ("更能") that are in the current translation result and that are not aligned with the last translation result is 1-0.75=0.25. For words in the current translation result that are aligned with the last translation result last("这一问题将定义您的职业成功"), a jump rate of these words is denoted as 0.

In an embodiment of this application, "a jump rate of a word included in a current translation result" may refer to a jump rate between the word in the current translation result and a corresponding word in a last translation result.

For another example, still as shown in FIG. 9A, a translation result is "这一问题比任何问题都更能定义您的职业成功", and a last translation result of the translation result is "这一问题将更能定义您的职业成功". If a similarity between the two translation results is 0.2, a jump rate of the six words ("比任何问题都") that are in the current translation result and that are not aligned with the last translation result is 1-0.2=0.8. For words in the current translation result that are aligned with the last translation result ("这一问题更能定义您的职业成功"), a jump rate of these words is denoted as 0.

For a word, when a jump rate is closer to 0, it indicates that a meaning of the word in the current translation result sentence is closer to a meaning of the word in the last translation result. In particular, when the jump rate is 0, it indicates that the word appears in the current translation result and also appears in the last translation result. When the jump rate of the word is close to 1, it indicates that a difference between a meaning of the word in the current translation result and a meaning of the word in the last translation result is greater.

Optionally, the jump rate satisfies Formula 1:

$$\beta_j = f_\theta\big(t_{<j}, t_{<j}{'}, s_{\leq i}\big) \qquad\qquad \text{Formula 1}$$

$\beta_j$ is a jump rate of a $j^{th}$ word in the first translation result, $\theta$ is a set model parameter, $t_{<j}{'}$ is a last translation result of a word before the $j^{th}$ word, $t_{<j}$ is a current translation result of the word before the $j^{th}$ word, and $s_{\leq i}$ is an $i^{th}$ word in to-be translated speech information.

Optionally, the target word distribution $p'(t_j|t_{<j}, s_{\ll i})$ satisfies Formula 2:

$$p'\big(t_j|t_{<j}, s_{\ll i}\big) = \beta_j \times p\big(t_j|t_{<j}, s_{\ll i}\big) + \big(1 - \beta_j\big) \times last\_p(t_j') \qquad \text{Formula 2}$$

Herein, $p'(t_j|t_{<j}, s_{\ll i})$ indicates a word distribution of the $j^{th}$ word included in the second translation result, $t_j'$ indicates a translation result of the $j^{th}$ word included in the first sentence, $last\_p(t_j')$ indicates a word distribution of the $j^{th}$ word included in the translation result of the first sentence, $\beta_j$ indicates a jump rate of the $j^{th}$ word included in the first translation result, and $p(t_j|t_{<j}, s_{\ll i})$ indicates a word distribution of the $j^{th}$ word included in the first translation result.

For example, as shown in FIG. 9A, the sentence 1 is a translation result of the first sentence S1 (this one question will define your professional success), and the sentence 2 is a preliminary translation result (namely, the first translation result) of the second sentence S2 (this one question will define your professional success more). Herein, $s_{\ll i}$ is a word included in S2. When j=6, it is assumed that a word distribution of the $6^{th}$ word (namely, "更") included in the sentence 2 is $p(t_j|t_{<j}, s_{\ll i})$. The $6^{th}$ word included in the sentence 1 is "定". A word distribution of "定" is $last\_p(t_j')$. $\beta_{j=6}$ is 1-0.75, that is, $\beta_{j=6}$ is 0.25. In this case, a word distribution of the $6^{th}$ word in a final translation result (namely, the second translation result) of S2 may be calculated according to the following formula: $p'(t_j|t_{<j}, s_{\ll i})$ = 0.25 $\times$ $p(t_j|t_{<j}, s_{\ll i})$ + (1 - 0.25) $\times last\_p(t_j')$. Similarly, another word in the final translation result of S2 may be obtained. In this way, the final translation result of S2 may be obtained. It can be learned that a jump rate of a word included in the sentence 2 is variable. For example, a jump rate (which is 0) of a word "定" changes relative to a jump rate (which is 0.25) of a word "能".

The principle of calculating the jump rate is described above. The following describes a training method for the jump rate model based on the foregoing principle of calculating the jump rate. The jump rate model is used to calculate and output the jump rate.

FIG. 9B further shows the training method for the jump rate model. A training sample of the jump rate model includes target-language sentences, a similarity between the target-language sentences, a result of alignment between consecutive target-language sentences, and labels. The label indicates a jump rate of a word included in the target-language sentence. In a possible implementation, the similarity model and the jump rate model may be trained simultaneously. A plurality of target-language sentences are input to the similarity model and the jump rate model. The similarity between target-language sentences and the result of alignment between the target-language sentences that are output by the similarity model are input to the jump rate model. The similarity and the alignment result are used as another part of the training sample of the jump rate model.

For example, the training sample of the jump rate model includes a target-language sentence 1 (这一问题将定义您的职业成功), the sentence 2 (这一问题将更能定义您的职业成 功), the sentence 3 (这一问题将比其他任何问题都更能定义您的职业成功), the similarity between the sentence 1 and the sentence 2, the similarity between the sentence 2 and the sentence 3, the result of alignment between the sentence 1 and the sentence 2 (as shown in ellipse boxes in FIG. 9A), a result of alignment between the sentence 2 and the sentence 3 (as shown in ellipse boxes in FIG. 9A), and a jump rate (namely, the label) of each word in the sentence 1, the sentence 2, and the sentence 3. In this way, after being trained, the jump rate model can output, based on two input sentences, a jump rate of a word included in one sentence (relative to the other sentence).

In some other embodiments, a transfer learning training method may be used to train a plurality of models. The plurality of models are separately used in different machine learning tasks. There may be an association relationship between the different tasks. Optionally, output results of some tasks can be used in another task. For example, the jump rate model and the NMT model are separately trained.

In some embodiments, a multi-task learning training method may be used to train one model, to execute a plurality of machine learning tasks. For example, one NMT model (for example, the NMT model shown in FIG. 8) is trained to calculate and output the jump rate and calculate the word distribution corresponding to the first translation result. In this method, the jump rate model can be considered as being integrated into the NMT model. The NMT model has a capability of calculating both the jump rate and the word distribution of the translation result.

The following separately describes the two model training methods.

Multi-task learning training method: As shown in FIG. 9C, the NMT model is trained, so that the model can output the jump rate and the target word distribution. In a possible implementation, a training sample required by the NMT model includes target-language sentences, a similarity between target-language sentences, a result of alignment between consecutive target-language sentences, and source-language sentences. Optionally, the training sample further includes a label indicating the jump rate. The target-language sentences, the similarity between the target-language sentences, and the result of alignment between the consecutive target-language sentences are used to train the NMT model, so that the NMT model has a capability of outputting the jump rate. The source-language sentence is used as the training sample to train the NMT model, so that the NMT model has a capability of outputting a translation result.

The translation tasks in FIG. 7A-1 and FIG. 7A-2 are used as an example. A current translation task is to translate S2. A last translation task is to translate S1. A translation result of the last translation task is the translation result of S1. When the NMT model is trained, the text information of S2, a label of the text information of S2 (namely, the word distribution of the final translation result of S2), and the translation result of S 1 are used as training samples and input to the NMT model. Similarly, text information of S3, a label of the text information of S3 (namely, a word distribution of a final translation result of S3), and the translation result of S2 are used as training samples and input to the NMT model. Text information of to-be-translated speech information in each translation task, a label corresponding to the text information, and a translation result obtained before a current translation task may be referred to as a group of training samples. Parameters such as a weight of the NMT model are iterated and updated by using a plurality of groups of training samples, so that the NMT model can output a word distribution of a translation result of a to-be-translated speech in a corresponding translation task, and output a jump rate of a word included in the translation result of the translation task.

Transfer learning training method: In this training manner, a training sample required for training the model includes text information of to-be-translated speech information in a current translation task, a label corresponding to the text information, and a translation result of a last translation task. A type of the training sample used in transfer learning is the same as that used in multi-task learning. A difference lies in that application scenarios of multi-task learning and transfer learning are different. For example, when there is a large amount of training data, the multi-task learning method may be used to train a large-scale model. The model may be used to output the jump rate and the word distribution of the translation result. When there is a small amount of training data, the training data may be insufficient to train a large-scale model. As a result, a lightweight jump rate model may be trained by using the small amount of data, to output the jump rate, and a lightweight NMT model may be trained by using the small amount of training data, to output the word distribution of the translation result.

FIG. 10 shows a process of performing machine translation using the jump rate model and the NMT model that are obtained through transfer learning. Different from that in the technical solution that corresponds to FIG. 8 and in which the NMT model is used to output both the jump rate and the word distribution of the translation result, in a technical solution corresponding to FIG. 10, a separate jump rate model is used to output, and the NMT model is used to output the word distribution of the translation result.

Specifically, in the technical solution corresponding to FIG. 10, the encoder module obtains the second sentence in the source language, and processes the second sentence to obtain the encoded vector corresponding to the second sentence. The encoder module is further used to output the encoded vector to the decoder module.

The decoder module is connected to the output end of the encoder module, and is used to receive the encoded vector from the encoder module, and process the encoded vector to obtain the word distribution of the first translation result of the second sentence.

The jump rate model is used to obtain the second sentence in the source language and the word distribution of the translation result of the first sentence in the source language, and determine the jump rate based on the second sentence and the word distribution of the translation result of the first sentence.

In a possible implementation, in the technical solution in FIG. 10, the NMT model and the jump rate model may form the first model. The NMT model may be referred to as a first submodel. The jump rate model may be referred to as a second submodel. In this training manner, a parameter of the first submodel and a parameter of the second submodel are decoupled.

The correction module is connected to an output end of the NMT model and an output end of the jump rate model. The correction module is used to obtain the word distribution of the translation result of the first sentence in the source language, receive the word distribution of the first translation result of the second sentence from the NMT model, receive the jump rate from the jump rate model, and determine the word distribution of the second translation result of the second sentence based on the word distribution corresponding to the translation result of the first sentence, the word distribution corresponding to the first translation result of the second sentence, and the jump rate.

In a possible implementation, a loss function of the NMT model trained according to the transfer learning method shown in FIG. 10 is denoted as Loss_NMT. A loss function of the NMT model trained according to the multi-task learning method shown in FIG. 8 is Loss=Loss_NMT+NLLLoss (β', β). NLLLoss (β', β) is a negative log-likelihood function.

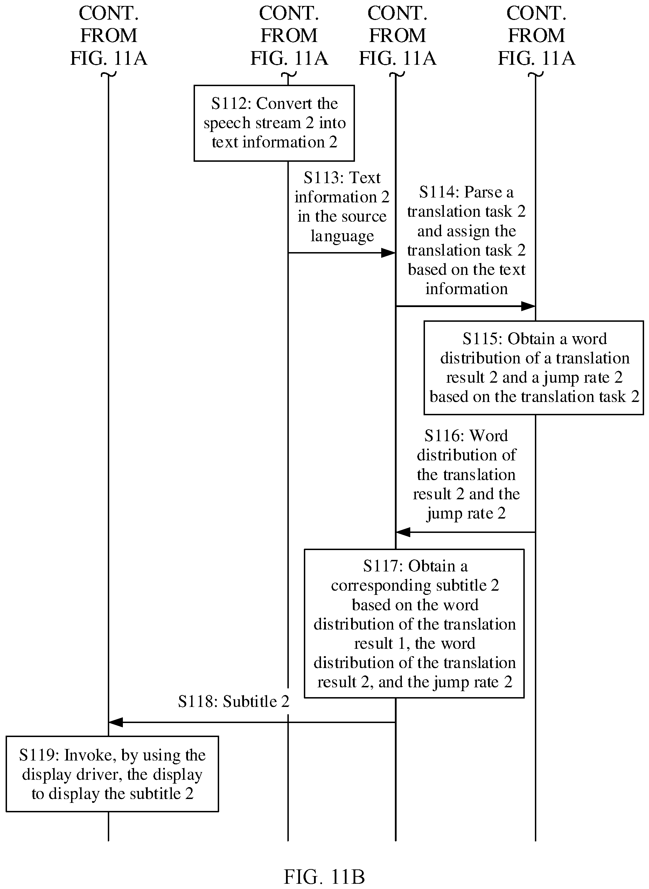

FIG. 11A and FIG. 11B show interaction between modules in the language translation method according to an embodiment of this application. As shown in FIG. 11A and FIG. 11B, the language translation method includes the following steps.

S101: An AI subtitle application detects an instruction that indicates machine translation.

The AI subtitle application is an application that may use an AI subtitle function, and includes but is not limited to applications such as a video application and a music application. For example, in this embodiment, a video application shown in FIG. 7B(1) to FIG. 7B(4) is used as an example.

S102: The AI subtitle application detects a speech stream 1 in a source language, and sends the speech stream 1 to a server.

S103: An ASR model in the server converts the speech stream 1 into text information 1.

S104: The ASR model sends the text information 1 in the source language to a first module.

Optionally, a function of a correction module is integrated into the first module.

S105: The first module parses a translation task 1 and assigns the translation task 1 to an NMT model based on the text information 1.

S106: The NMT model obtains a translation result 1 in a target language of the speech stream 1 and a jump rate 1 of a word in a translation result 1 based on the translation task 1.

S107: The NMT model feeds back the translation result 1 and the jump rate 1 to the first module.

S108: The first module obtains a subtitle 1 in the target language corresponding to the translation result 1.

S109: The first module feeds back the subtitle 1 to the AI subtitle application.

S110: The AI subtitle application invokes, by using a display driver, a display to display the subtitle 1.

For example, if a speech stream collected by the video application is English "this one question will define your professional success", after the AI subtitle function is enabled, a mobile phone may display a subtitle shown in FIG. 7B(2) on the display.

S111: The AI subtitle application collects a speech stream 2 in the source language and sends the speech stream 2 to the ASR model.

S112: The ASR model converts a speech stream 2 into text information 2 in the source language.

S113: The ASR model sends the text information 2 in the source language to the first module.

S114: The first module parses a translation task 2 and assigns the translation task 2 to the NMT model based on the text information 2.

S115: The NMT model obtains a translation result 2 in the target language and a jump rate 2 of a word in the translation result 2 based on the translation task 2.

S116: The NMT model feeds back the translation result 2 and the jump rate 2 to the first module.

S117: The first module obtains a corresponding subtitle 2 in the current language based on the translation result 1, the translation result 2, and the jump rate 2.

Optionally, the correction module is integrated into the first module, and is used to generate a target word distribution of the translation result 2 based on the last translation result 1, the current translation result 2, and the jump rate 2, and obtain the corresponding subtitle 2 based on the target word distribution.

S118: The first module sends the subtitle 2 to the AI subtitle application.

S119: The AI subtitle application invokes, by using the display driver, the display to display the subtitle 2.

For example, if the speech stream 2 is English "this one question will define your professional success more", the video application collects the speech stream 2, and may input the speech stream 2 to the ASR model, and then is processed by the ASR model, the NMT model, and the first module, to obtain the corresponding subtitle. For example, the subtitle shown in FIG. 7B(2) is obtained, and the subtitle is displayed on the display.

According to the language translation method provided in embodiments of this application, a jump rate of a word included in a current translation result in a current translation context can be obtained based on the current translation context. A translation result that needs to be changed is automatically identified based on the jump rate. A final target word distribution is adaptively generated. The target word distribution (for example, a word distribution used to generate a Chinese subtitle) is no longer a fixed word distribution, for example, is no longer fixed as a word distribution in a last translation result, or fixed as word distribution in the current translation result, but may change with the translation context (the jump rate changes accordingly), to obtain a non-fixed target word distribution. In this way, the generated target word distribution is more suitable for the translation context, and translation performance of an electronic device can be improved. For example, a translation result generated by the model has a lower jump rate. This ensures that translated content does not change, and better maintains a focus of a user on content of a source video/audio.

An embodiment of this application further provides a subtitle generation method, which may be applied to a re-translation technical architecture. After a translation result is generated, a new functional module may be added to control presentation of a subtitle. In this way, an adaptive suffix masking solution is formed. Optionally, a to-be-translated sentence may be input to a model. The model outputs a to-be-presented subtitle corresponding to the to-be-translated sentence.

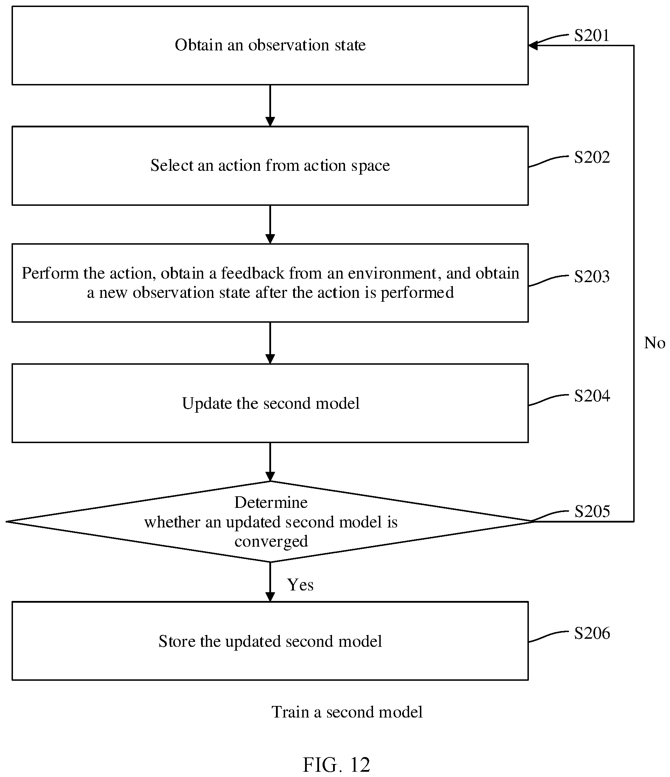

First, a method for training the model is described. For example, the model may be trained in a reinforcement learning manner. For a procedure of training the model, refer to FIG. 12. The procedure includes the following steps S201 to S206.

S201: Obtain an initial observation state (state).

The initial observation state includes a current translation result and a last translation result.

S202: Select an action (action) from action space.

In a possible implementation, the action is selected from the action space based on a greedy algorithm (which may also be another algorithm). Optionally, the action may be that an electronic device presents a character (a word) in a corresponding region or at a corresponding location of a display. Table 1 shows an example of the action space.

Table 1

| Action | Display rule | Action distribution value |
|---|---|---|
| Action 1 | Display a mask | [0.9, 0.04, 0.02, 0.02, 0.02] |
| Action 2 | Display the 1st character that historically appears at a current location | [0.04, 0.9, 0.02, 0.02, 0.02] |
| Action 3 | Display the 2nd character that historically appears at the current location | [0.02, 0.42, 0.5, 0.04, 0.02] |
| Action 4 | Display the latest character that historically appears at the current location | [0.02, 0.02, 0.12, 0.8, 0.04] |
| Action 5 | Display a current translation result of a corresponding word | [0.02, 0.04, 0.22, 0.02, 0.7] |

The action space shown in Table 1 includes five actions. Each action corresponds to a display rule and an action distribution value. The display rule indicates displaying an $n^{th}$ (n is a positive integer) character that historically appears at the current location, displaying a mask (Mask, M for short), or displaying a current translation result. The action distribution value indicates a probability distribution corresponding to the display rule. A sum of probabilities in the action distribution value is 1. Displaying the mask may be understood as displaying no word at a corresponding location.

According to the greedy algorithm, each time an action to be performed by the electronic device is selected from the action space, a probability of performing random exploration is $\varepsilon$ (a value range is less than or equal to 1 and greater than or equal to 0), and a probability of selecting an action with a maximum Q value is 1-$\varepsilon$. In other words, each time the action is selected, a probability of randomly selecting an action from the action space is $\varepsilon$, and a probability of selecting an action with the maximum Q value from the action space is 1-$\varepsilon$.

Herein, the action space is a set of a series of actions performed by the electronic device, for example, including that the electronic device displays a word at a corresponding location on the display.

The foregoing uses the greedy algorithm only as an example to describe the method for selecting the action to be performed. During actual application, other algorithms may be used to select the action, which are not listed one by one herein.

Table 2 is used as an example to describe steps of selecting the action.

**Table 2**

| | p0 | p1 | p2 | p3 | p4 | p5 | p6 | p7 | p8 | p9 | p10 | ... | ... | ... | ... | ... | ... | ... | ... | ... | ... |
|---|---|---|---|---|---|---|---|---|---|---|---|---|---|---|---|---|---|---|---|---|---|
| this | 这 | 个 | | | | | | | | | | | | | | | | | | | |
| one | 这 | 个 | | | | | | | | | | | | | | | | | | | |
| question | 这 | 个 | 问 | 题 | | | | | | | | | | | | | | | | | |
| will | 这 | 个 | 问 | 题 | 将 | | | | | | | | | | | | | | | | |
| define | 这 | 一 | 问 | 题 | 将 | 定 | 义 | | | | | | | | | | | | | | |
| **your** | **这** | **一** | **问** | **题** | **将** | **定** | **义** | **您** | **的** | | | | | | | | | | | | |
| **professional** | **这** | **一** | **问** | **题** | **将** | **定** | **义** | **您** | **的** | **M** | **M** | | | | | | | | | | |
| success | 这 | 一 | 问 | 题 | 将 | 定 | 义 | 您 | 的 | 职 | 业 | 成 | 功 | | | | | | | | |
| more | 这 | 一 | 问 | 题 | 将 | 更 | 能 | 定 | 义 | 您 | 的 | 职 | 业 | 成 | 功 | | | | | | |
| than | 这 | 一 | 问 | 题 | 将 | 定 | 义 | 您 | 的 | 职 | 业 | 成 | 功 | ， | 而 | 不 | 是 | | | | |
| any | 这 | 一 | 问 | 题 | 将 | 比 | 其 | 它 | 问 | 题 | 更 | 能 | 定 | 义 | 您 | 的 | 职 | 业 | 成 | 功 | |
| other | 这 | 一 | 问 | 题 | 将 | 比 | 其 | 它 | 问 | 题 | 更 | 能 | 定 | 义 | 您 | 的 | 职 | 业 | 成 | 功 | 。 |

Table 2 shows a source-language sentence and a target-language sentence that corresponds to each translation task in a process of translating the English sentence "this one question will define your professional success more than any other". For example, when the English sentence "this one question will define your professional" is translated, the action 2 is selected to display, at the location p0 of the display, the 1st character (namely, "ft") that historically appears at the location. The action 3 is selected to display, at the location p1 of the display, the 2nd character (namely, "一") that historically appears at the location. By analogy, the action 1 is selected, to display masks at the locations p10 and p11 of the display, or a translation result of a newly added word is not displayed at the locations p10 and p11 (in other words, a translation result of "professional" is not displayed at the locations p10 and p11).

For another example, when the English sentence "this one question will define your professional more" is translated, for the display rule for the locations p5 and p6, the action 5 is selected to display, at the locations p5 and p6, a current translation result of a corresponding word, that is, to display a translation result "更能" of a word "more".

S203: Perform the action, obtain a feedback from an environment, and obtain a new observation state obtained after the action is performed.

For example, the initial observation state includes the current translation result. Based on the translation result and a specific algorithm, for example, the greedy algorithm, the action 5 is selected from the action space (it is assumed that the action 5 is displaying a subtitle shown in FIG. 7B(3)). Then, the action 5 is performed. In this case, a feedback that is from the environment and that is for the action is obtained. The feedback is used to reward or punish performing of the action 5, to update the observation state to a new observation state. The new observation state includes a new translation result of the electronic device obtained after the action 5 is performed.

It may be understood that, after the action 5 is performed, if translation performance of the electronic device meets a first condition, the obtained feedback r is a reward. The reward indicates that the translation performance of the electronic device can be ensured when the action 5 is performed. After the action 5 is performed, if translation performance of the electronic device does not meet a first condition, an obtained feedback r is a penalty. The penalty indicates that the translation performance of the electronic device is poor when the action 5 is performed.

It may be understood that, after an action is performed, a larger quantity of rewards indicates a larger Q value corresponding to the action.

In a possible implementation, the feedback r may be defined in the following function form:

$$r = a \times DELAY + b \times CHANGE + c \times QUALITY.$$

Herein, a is a weight of the parameter DELAY, b is a weight of the parameter CHANGE, and c is a weight of the parameter QUALITY a, b, and c may be flexibly set based on an application scenario, for example, may vary with service preference. When the user prefers a low delay in language translation, a value of a may be increased.

DELAY indicates a delay between the last translation result and the current translation result, and can be used to measure timeliness of translation performance. Optionally, DELAY =

$$\begin{cases} 0 & \text{two consecutive translation results are consistent} \\ -max(0, a \text{ time difference between current translation and last translation} - 1000 \text{ ms}) \end{cases}$$

.

CHANGE indicates a change between the current translation result and the last translation result, or indicates a jump rate of a word included in the current translation result, or indicates a similarity between the current translation result and the last translation result.

Optionally, CHANGE =

$$\begin{cases} 0 & \text{a prefix does not change between two consecutive translation results} \\ -0.2 & \text{a prefix changes between two consecutive translation results} \end{cases}$$

.

QUALITY indicates translation performance or translation quality.

Optionally, QUALITY=BLEU. A value of QUALITY is 0 when a sentence does not end.

It can be learned that each time a corresponding action is performed, that is, a subtitle is displayed in a corresponding region or at a corresponding location of the display, a current reward or penalty can be obtained through calculation by using the feedback function.

S204: Update a subtitle presentation model (which may also be referred to as a second model).

In a possible implementation, the subtitle presentation model is updated by using stochastic gradient descent (Stochastic Gradient Descent, SGD) or mini-batch gradient descent (Mini-Batch Gradient Descent, MBGD).

Updating the subtitle presentation model includes but is not limited to updating a parameter of an action network and a parameter of an evaluation network of the subtitle presentation model.

The action network is used to predict and output, by observing an environment status, a policy (policy) that should be currently executed. The evaluation network is used to evaluate and output an advantage and a disadvantage of the current policy. The policy is used to determine a mode of display at a display location or in a display region of the display, including displaying a historical translation result, displaying the current translation result, or displaying no translation result. Optionally, as the subtitle presentation model is updated, an updated subtitle presentation model may be obtained. The updated subtitle presentation model can predict and output a target policy. The target policy can maximize a reward, that is, optimize translation performance.

For a specific procedure of updating the subtitle presentation model, refer to the conventional technology. Details are not described in embodiments of this application.

S205: Determine whether the updated second model converges. If the updated second model converges, perform S206. If the updated second model does not converge, continue to perform S201 to S204 and determine whether the updated second model converges until the updated second model converges.

Model convergence means that, when a given quantity of iterations is reached, an output from the model changes slightly, or an output from the model changes slightly among several consecutive iterations. For example, after a 1st iteration, an output result from the model is a result 1. After a 2nd iteration, an output result from the model is a result 2. A difference between the result 1 and the result 2 is a small number.

S206: Store the updated second model.

Optionally, the updated subtitle presentation model is stored in a memory.

A converged subtitle presentation model is considered as a trained subtitle presentation model and is used.

According to this method, adaptive suffix masking can be performed on the translation result during real-time translation, to reduce a subtitle jump. Reducing subtitle jump may be reducing a prefix jump or a suffix jump of a subtitle.

FIG. 13 shows another procedure of a language translation method according to an embodiment of this application. The method includes the following steps.

S301: An electronic device obtains a word distribution of a translation result of a first sentence in a source language and a second sentence in the source language.

The second sentence includes a word in the first sentence and a first word.

S302: The electronic device obtains a word distribution of a first translation result of the second sentence and a jump rate of a word included in the first translation result of the second sentence.

The jump rate is related to a first similarity. The first similarity is a similarity between the translation result of the first sentence and the first translation result of the second sentence.

In a possible implementation, the electronic device inputs the word distribution of the translation result of the first sentence and the second sentence into a first model, and obtains the word distribution of the first translation result of the second sentence and the jump rate by using the first model.

In some embodiments, if the first model is the NMT model shown in FIG. 8, the electronic device inputs the word distribution of the translation result of the first sentence and the second sentence into the NMT model, and determines and outputs the word distribution of the first translation result of the second sentence and the jump rate by using the NMT model.

The NMT model is obtained by training a training sample. The training sample includes a plurality of target-language sentences, a similarity between consecutive target-language sentences in the plurality of target-language sentences, a result of word alignment between the consecutive target-language sentences, a plurality of source-language sentences, a first label corresponding to the target-language sentence, and a second label corresponding to the source-language sentence. The first label indicates a jump rate of a word included in the target-language sentence. The second label indicates a translation result of the source-language sentence. For a training process of the NMT model, refer to FIG. 9C and the corresponding descriptions. Details are not described herein again.

In some other embodiments, if the first model includes the NMT model (the first submodel) and the jump rate model (the second submodel) shown in FIG. 10, the electronic device inputs the word distribution of the translation result of the first sentence and the second sentence to the jump rate model, inputs the second sentence to the NMT model, obtains the word distribution of the first translation result of the second sentence by using the NMT model, and obtains the jump rate by using the jump rate model.

The NMT model is obtained by training a plurality of training samples. The plurality of training samples include a plurality of source-language sentences and a second label corresponding to the source-language sentence. The second label indicates a translation result of the source-language sentence.

The jump rate model is obtained by training a plurality of training samples. The plurality of training samples include a plurality of target-language sentences, a similarity between consecutive target-language sentences in the plurality of target-language sentences, a result of word alignment between the consecutive target-language sentences, and a first label corresponding to the target-language sentence. The first label indicates a jump rate of a word included in the target-language sentence. For example, for a training process of the jump rate model, refer to FIG. 9B and the corresponding descriptions. Details are not described herein again.

S303: The electronic device determines a word distribution of a second translation result of the second sentence based on the word distribution of the translation result of the first sentence, the word distribution of the first translation result of the second sentence, and the jump rate.

It should be noted that names of functional modules mentioned in embodiments of this application are merely examples, and do not constitute a limitation on functions of the modules.

It should be noted that the steps in the foregoing method procedure are merely examples. Some steps may alternatively be replaced with other steps, or some steps may be added or deleted.

Some operations in the procedures of the foregoing method embodiments are optionally combined, and/or a sequence of some operations is optionally changed.

In addition, an execution sequence of the steps of the procedures is merely an example, and does not constitute a limitation on the execution sequence of the steps. The steps may alternatively be in another execution sequence. It is not intended to indicate that the execution sequence is a unique sequence in which these operations can be performed. A person of ordinary skill in the art may learn a plurality of manners of permutating the operations in this specification. In addition, it should be noted that, for a method, details of another process of combining another method in this specification are also applicable to combination of this method in a similar manner in this specification.

For example, in FIG. 13, the technical solution is described by using an example in which the server performs translation. In some other embodiments, a terminal may perform translation. In other words, the ASR model, the NMT model, and the correction module are located in the terminal.

Some other embodiments of this application provide an apparatus. The apparatus may be the foregoing electronic device (for example, a foldable mobile phone). The apparatus may include a display, a memory, and one or more processors. The display and the memory are coupled to the processor. The memory is configured to store computer program code. The computer program code includes computer instructions. When the processor executes the computer instructions, the electronic device may perform functions or steps performed by the mobile phone in the foregoing method embodiments. For a structure of the electronic device, refer to the electronic device shown in FIG. 5 or FIG. 4.

A core structure of the electronic device may be represented as a structure shown in FIG. 14. The core structure may include a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of the electronic device of a user. Specifically, the processing module 1301 may be configured to control, based on a specific trigger condition, content displayed on a primary screen, or determine, according to a preset rule, content displayed on a screen. The processing module 1301 is further configured to process input instructions or data, and determine a display style based on processed data.

The input module 1302 is configured to: obtain the instructions or the data input by the user, and transmit the obtained instructions or data to another module of the electronic device. Specifically, an input mode of the input module 1302 may include a touch, a gesture, proximity to the screen, or the like, or may be voice input. For example, the input module may be the screen of the electronic device, and may obtain an input operation of the user, generate an input signal based on the obtained input operation, and transmit the input signal to the processing module 1301.

The storage module 1303 may include a volatile memory and/or a non-volatile memory. The storage module is configured to store instructions or data related to at least one of other modules of a terminal device of the user. Specifically, the storage module may record a location of an interface on which a terminal interface element UI is located.

The display module 1304 may include, for example, a liquid crystal display (LCD), a light-emitting diode (LED) display, an organic light-emitting diode (OLED) display, a micro-electromechanical system (MEMS) display, or an electronic paper display, and is configured to display content (for example, a text, an image, a video, an icon, or a symbol) that can be viewed by the user.

Optionally, the structure shown in FIG. 14 may further include a communication module 1305, configured to support communication between the electronic device and another electronic device. For example, the communication module may be connected to a network through wireless communication or wired communication, to communicate with another personal terminal or a network server. The wireless communication may use at least one of cellular communication protocols such as long term evolution (LTE), long term evolution advanced (LTE-A), code division multiple access (CDMA), wideband code division multiple access (WCDMA), universal mobile telecommunications system (UMTS), wireless broadband (WiBro), and a global system for mobile communications (GSM). The wireless communication may include, for example, short-range communication. The short-range communication may include at least one of wireless fidelity (Wi-Fi), Bluetooth, near-field communication (NFC), magnetic stripe transmission (MST), or a GNSS.

It should be noted that, the descriptions of the steps in the method embodiments of this application may be cited as those of the modules corresponding to the apparatus. Details are not described herein again.

An embodiment of this application further provides a chip system. As shown in FIG. 15, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of an electronic device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the electronic device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the foregoing electronic device, the electronic device is enabled to perform functions or steps performed by the mobile phone in the foregoing method embodiments.

An embodiment of this application further provides a computer program product. When the computer program product runs on a computer, the computer is enabled to perform functions or steps performed by the mobile phone in the foregoing method embodiments.

The foregoing descriptions of the implementations allow a person skilled in the art to clearly understand that, for the purpose of convenient and brief description, division into the foregoing functional modules is only used as an example for illustration. During actual application, the foregoing functions may be allocated to different modules for implementation based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, for example, a USB flash drive, a removable hard disk, a read-only memory (read-only memory, ROM), a random-access memory (random-access memory, RAM), a magnetic disk, and an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A language translation method, wherein the method comprises:

   obtaining, by an electronic device, a word distribution of a translation result of a first sentence in a source language and a second sentence in the source language, wherein the second sentence comprises a word and a first word in the first sentence;
   obtaining, by the electronic device, a word distribution of a first translation result of the second sentence and a jump rate of a word comprised in the first translation result of the second sentence, wherein the jump rate is related to a first similarity, and the first similarity is a similarity between the translation result of the first sentence and the first translation result of the second sentence; and
   determining, by the electronic device, a word distribution of a second translation result of the second sentence based on the word distribution of the translation result of the first sentence, the word distribution of the first translation result of the second sentence, and the jump rate, wherein
   the word comprised in the first translation result comprises at least a second word and a third word, and a jump rate of the third word changes relative to a jump rate of the second word.

2. The method according to claim 1, wherein the obtaining, by the electronic device, a word distribution of a first translation result of the second sentence and a jump rate of a word comprised in the first translation result of the second sentence comprises:

   inputting, by the electronic device, the word distribution of the translation result of the first sentence and the second sentence to a first model; and
   obtaining, by the electronic device, the word distribution of the first translation result of the second sentence and the jump rate by using the first model.

3. The method according to claim 2, wherein the first model is obtained by training a training sample, the training sample comprises a plurality of target-language sentences, a similarity between consecutive target-language sentences in the plurality of target-language sentences, a result of word alignment between the consecutive target-language sentences, a plurality of source-language sentences, a first label corresponding to the target-language sentence, and a second label corresponding to the source-language sentence, the first label indicates a jump rate of a word comprised in the target-language sentence, and the second label indicates a translation result of the source-language sentence.

4. The method according to claim 2 or 3, wherein the first model comprises a first submodel and a second submodel; and the obtaining, by the electronic device, the word distribution of the first translation result of the second sentence and the jump rate by using the first model comprises:
   obtaining, by the electronic device, the word distribution of the first translation result of the second sentence by using the first submodel, and obtaining the jump rate by using the second submodel.

5. The method according to claim 4, wherein the first submodel is obtained by training a plurality of training samples, the plurality of training samples comprise the plurality of source-language sentences and the second label corresponding to the source-language sentence, and the second label indicates the translation result of the source-language sentence.

6. The method according to claim 4, wherein the second submodel is obtained by training a plurality of training samples, the plurality of training samples comprise the plurality of target-language sentences, the similarity between the consecutive target-language sentences in the plurality of target-language sentences, the result of word alignment between the consecutive target-language sentences, and the first label corresponding to the target-language sentence, and the first label indicates the jump rate of the word comprised in the target-language sentence.

7. The method according to any one of claims 1 to 6, wherein the determining, by the electronic device, a word distribution of a second translation result of the second sentence based on the word distribution of the translation result of the first sentence, the word distribution of the first translation result of the second sentence, and the jump rate comprises: obtaining, by the electronic device according to the following formula, a word distribution of a $j^{th}$ word comprised in the second translation result of the second sentence, wherein the word distribution of the second translation result comprises a word distribution of each word in the second translation result:

$$p'\!\left(t_j\middle|t_{<j}, s_{\ll i}\right) = \beta_j \times p\!\left(t_j\middle|t_{<j}, s_{\ll i}\right) + \left(1 - \beta_j\right) \times last\_p\!\left(t_j'\right),$$

wherein

$p'(t_j|t_{<j}, s_{\ll i})$ indicates the word distribution of the $j^{th}$ word comprised in the second translation result, $t_j'$ indicates a translation result of the $j^{th}$ word comprised in the first sentence, $last\_p\!\left(t_j'\right)$ indicates a word distribution of the $j^{th}$ word comprised in the translation result of the first sentence, $\beta_j$ indicates a jump rate of the $j^{th}$ word comprised in the first translation result, and $p(t_j|t_{<j}, s_{\ll i})$ indicates a word distribution of the $j^{th}$ word comprised in the first translation result.

8. The method according to any one of claims 1 to 7, wherein
for a target word in the first translation result of the second sentence:

   if no word that is the same as the target word exists in the translation result of the first sentence, $\beta_j$=1-$\alpha$; or
   if a word that is the same as the target word exists in the translation result of the first sentence, $\beta_j = 0$, wherein $\beta_j$ is a jump rate of the target word, and $\alpha$ is the first similarity.

9. The method according to any one of claims 1 to 8, wherein the similarity is obtained by using a semantic similarity model, a training sample of the semantic similarity model comprises a plurality of sentences and a label corresponding to each sentence, and the label corresponding to the sentence indicates a similarity between the sentence and a consecutive sentence.

10. An electronic device, comprising:

   one or more processors;
   a memory; and
   one or more computer programs, wherein the one or more computer programs are stored in the memory, and when the computer program is executed by the one or more processors, the electronic device is enabled to perform the method according to any one of claims 1 to 9.

11. A computer-readable storage medium, wherein the computer-readable storage medium comprises a computer program or instructions, and when the computer program or the instructions are run on a computer, the computer is enabled to perform the method according to any one of claims 1 to 9.

**12.** A computer program product, wherein the computer program product comprises a computer program or instructions, and when the computer program or the instructions are run on a computer, the computer is enabled to perform the method according to any one of claims 1 to 9.

```
┌─────────────────────────────────────────────────────┐
│        Input a speech stream in a source language     │
└─────────────────────────────────────────────────────┘
                          │
                          ▼
┌─────────────────────────────────────────────────────┐
│            Automatic speech recognition               │
└─────────────────────────────────────────────────────┘
                          │
            Text information in the source language
                      (I am a student)
┌─────────────────────────────────────────────────────┐
│  Neural machine translation model                     │
│                          │                            │
│                          ▼                            │
│  ┌───────────────────────────────────────────────┐   │
│  │               Encoder module                    │   │
│  └───────────────────────────────────────────────┘   │
│                          │                            │
│            Encoded vector of each word in a           │
│               source-language sentence                │
│                          ▼                            │
│  ┌───────────────────────────────────────────────┐   │
│  │               Decoder module                    │   │
│  └───────────────────────────────────────────────┘   │
└─────────────────────────────────────────────────────┘
                          │
            Word distribution of each word in a target-
            language sentence (a word distribution of each
                   word in "我是一个学生")
                          ▼
```

FIG. 1

Speech stream in a source language

Automatic speech recognition model → Neural machine translation model → Target-language sentence: 这个问题将定义您的职业成功

Source-language sentence

S1: this one question will your professional success

Speech stream in the source language

Automatic speech recognition model → Neural machine translation model → Translation result: 这个问题将定义您的职业成功，更加

Text information in the source language

S2: this one question will define your professional success **more**

Moment B

Moment A

Moment C

Time

Text information in the source language

Translation result: 这个问题将定义您的职业成功，更加比其他问题

Speech stream in the source language

Automatic speech recognition model → Neural machine translation model →

S3: this one question will define your professional success more **than any other**

FIG. 2

EP 4 401 001 A1

Speech stream in a source language

Automatic speech recognition model

Neural machine translation model

Translation result:
这个问题将定义您的
职业成功

S1: this one question will
your professional success

Text information in
the source language

Speech stream in the source language

Automatic speech recognition model

Neural machine translation model

Translation result:
这个问题将更能定义
您的职业成功

Text information in
the source language

S2: this one question will define
your professional success **more**

Time

t0    t1    t2

Text information in
the source language

Speech stream in the source language

Automatic speech recognition model

Neural machine translation model

Translation result:
这个问题将更能定义您的
职业成功，而不是

S3: this one question will define
your professional success more **than**

FIG. 3

EP 4 401 001 A1

Antenna 1

Antenna 2

Mobile communication module
2G/3G/4G/5G
[150]

Wireless communication module
Bluetooth/Wireless local area network/
Global navigation satellite system/Near-field
communication/Infrared/Frequency
modulation
[160]

Audio module [170]

Displays 1 to N [194]

Cameras 1 to N [193]

Indicator [192]

Motor [191]

Processor
[110]

Sensor module [180]

Button [190]

External memory
interface [120]

Internal memory
[121]

Subscriber identity
module card
interfaces 1 to N
[195]

Serial bus interface
[130]

Charging
input

Charging
management
module
[140]

Power
management
module [141]

Battery [142]

FIG. 4

503 Transceiver

501 Processor

Memory 502

FIG. 5

FIG. 6

t1: a translation result
(这一问题将定义您的职业成功) of S1

S1: this one question
will define your
professional success

→ | ASR model | → | NMT model | → | Correction module | → Target word distribution p1: a word distribution of t1

| Storage module |

Word distribution of the
translation result of S1

Word distribution of the
translation result of S1,
a word distribution of a
translation result of S2,
and a jump rate

Determine a target word
distribution based on the word
distribution of the translation
result of S1, the word
distribution of the translation
result of S2, and the jump rate

S2: this one question will
define your professional
success **more**

→ | ASR model | → Text information of S2 → | NMT model | → | Correction module | → Target word distribution p2: a word distribution of t2

| Storage module |

t2: a translation result
(这一问题将更能定义
您的职业成功) of S2

TO
FIG. 7A-2

FIG. 7A-1

CONT. FROM FIG. 7A-1

Word distribution of the translation result of S2

Word distribution of a translation result of S3, the word distribution of the translation result of S2, and the jump rate

Determine a target word distribution based on the word distribution of the translation result of S3, the word distribution of the translation result of S2, and the jump rate

p3: the word distribution of t2

Correction module

NMT model

ASR model

Text information of S3

t3: a translation result (这一问题将更能定义您的职业成功) of S3

S3: this one question will define your professional success more than

FIG. 7A-2

China Mobile      08:08

301

A video that includes a human speech is identified. Tap the Enable button to enable an AI subtitle

Enable      Cancel

302

TO
FIG. 7B(2)

FIG. 7B(1)

China Mobile

CONT.
FROM
FIG. 7B(1)
~

✕

303

这一问题将定义您的
职业成功

FIG. 7B(2)

FIG. 7B(3)

FIG. 7B(4)

Word distribution of a
translation result
(这一问题将定义您的职业
成功) of a first sentence in a
source language

Second sentence in the source
language (this one question
will define your professional
success **more**)

Neural machine translation model

Encoder module

Word distribution of the
translation result of the
first sentence

Encoded vector of
the second sentence

Decoder module

Word distribution of the
translation result of the
first sentence

**Jump rate**

Word distribution of a
first translation result of
the second sentence

Correction module

**Word distribution of a second
translation result of the second sentence**

FIG. 8

Translation result (a
sentence 1) of a
previous translation task

这 一 问 题 将 定 义 您 的 职 业 成 功

Similarity: 0.75

Translation result (a
sentence 2) of a current
translation task

这 一 问 题 将 更 能 定 义 您 的 职 业 成 功

Jump rate     0   0    0    0    0   0.25   0.25   0    0    0   0     0    0    0

Translation result (the
sentence 2) of the
previous translation task

这 一 问 题 将 更 能 定 义 您 的 职 业 成 功

Similarity: 0.2

Translation result (a
sentence 3) of the current
translation task

这 一 问 题 比 任 何 问 题 都 更 能 定 义 您 的 职 业 成 功

Jump rate     0   0    0    0   0.8    0.8     0.8   0.8    0.8    0.8    0    0     0   0    0    0    0    0    0

FIG. 9A

Training phase

FIG. 9B

Training phase

FIG. 9C

Second sentence in the
source language (this one
question will define your
professional success **more**)

Word distribution of a translation result
(这一问题将定义您的职业成功) of a
first sentence in a source language

Neural machine translation model

Encoder module

Encoded vector of
the second sentence

Decoder module

Word distribution of
a first translation
result of the second
sentence

**Jump rate model**

**Jump rate**

Correction module

**Second translation result
of the second sentence**

FIG. 10

| Mobile phone | | Server | | |
| --- | --- | --- | --- | --- |
| AI subtitle application | ASR model | First module | NMT model |

S101: Machine
translation request

S102: Speech stream
1 in a source language

S103: Convert the speech
stream 1 into text information 1

S104: Text
information
1 in the
source
language

S105: Parse a
translation task 1
and assign the
translation task 1
based on the text
information

S106: Obtain a word
distribution of a translation
result 1 and a jump rate 1
based on the translation task 1

S107: Word
distribution of
the translation
result 1 and the
jump rate 1

S108: Obtain a subtitle 1
corresponding to the
translation result 1

S109: Subtitle 1

S110: Invoke, by using a
display driver, a display to
display the subtitle 1

S111: Speech stream 2
in the source language

TO
FIG. 11B

TO
FIG. 11B

TO
FIG. 11B

TO
FIG. 11B

FIG. 11A

42

CONT.
FROM
FIG. 11A

CONT.
FROM
FIG. 11A

CONT.
FROM
FIG. 11A

CONT.
FROM
FIG. 11A

S112: Convert the speech stream 2 into text information 2

S113: Text information 2 in the source language

S114: Parse a translation task 2 and assign the translation task 2 based on the text information

S115: Obtain a word distribution of a translation result 2 and a jump rate 2 based on the translation task 2

S116: Word distribution of the translation result 2 and the jump rate 2

S117: Obtain a corresponding subtitle 2 based on the word distribution of the translation result 1, the word distribution of the translation result 2, and the jump rate 2

S118: Subtitle 2

S119: Invoke, by using the display driver, the display to display the subtitle 2

FIG. 11B

```
┌─────────────────────────────────────────────┐
│         Obtain an observation state          │─ S201
└─────────────────────────────────────────────┘
                      │
                      ▼
┌─────────────────────────────────────────────┐
│        Select an action from action space    │─ S202
└─────────────────────────────────────────────┘
                      │
                      ▼
┌─────────────────────────────────────────────┐
│ Perform the action, obtain a feedback from an│─ S203
│ environment, and obtain a new observation    │
│ state after the action is performed          │
└─────────────────────────────────────────────┘
                      │
                      ▼
┌─────────────────────────────────────────────┐
│            Update the second model           │─ S204
└─────────────────────────────────────────────┘
                      │
                      ▼
            Determine
   whether an updated second model is ─ S205
            converged
                      │ Yes
                      ▼
┌─────────────────────────────────────────────┐
│        Store the updated second model        │─ S206
└─────────────────────────────────────────────┘
```

No

Train a second model

FIG. 12

An electronic device obtains a word distribution of a translation result of a first sentence in a source language and a second sentence in the source language ⟋ S301

The electronic device obtains a word distribution of a first translation result of the second sentence and a jump rate of a word included in the first translation result of the second sentence ⟋ S302

The electronic device determines a word distribution of a second translation result of the second sentence based on the word distribution of the translation result of the first sentence, the word distribution of the first translation result of the second sentence, and the jump rate ⟋ S303

FIG. 13

Display module 1304

1301

1302

Input module ⟷ Processing module ⟷ Communication module 1305

Storage module 1303

FIG. 14

Chip system

1401

Processor

1401

Processor

Interface
circuit

Interface
circuit

1402

1402

FIG. 15

## INTERNATIONAL SEARCH REPORT

| | International application No. |
|---|---|
| | **PCT/CN2022/128836** |

| A. | CLASSIFICATION OF SUBJECT MATTER |
|---|---|

G06F 40/58(2020.01)i

According to International Patent Classification (IPC) or to both national classification and IPC

| B. | FIELDS SEARCHED |
|---|---|

Minimum documentation searched (classification system followed by classification symbols)

G06F; G10L

Documentation searched other than minimum documentation to the extent that such documents are included in the fields searched

Electronic data base consulted during the international search (name of data base and, where practicable, search terms used)

CNTXT, WPABSC, ENTXTC, ENTXT, WPABS, DWPI: 实时, 即时, 时刻, 翻译, 语音, 新增, 增加, 句子, 第二, 相似度, 跳变, 对齐, 标签; real time, instant, translate, voice, speech, add, sentence, second, similarity, saltus, jump, align,

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 107632980 A (BEIJING SOGOU TECHNOLOGY DEVELOPMENT CO., LTD.) 26 January 2018 (2018-01-26)<br> description, paragraphs [0045]-[0207] | 1-12 |
| A | CN 108460027 A (GUANGDONG FOREIGN TRADE UNIVERSITY) 28 August 2018 (2018-08-28)<br> entire document | 1-12 |
| A | CN 110705317 A (IFLYTEK CO., LTD.) 17 January 2020 (2020-01-17)<br> entire document | 1-12 |
| A | CN 112380837 A (PING AN TECHNOLOGY (SHENZHEN) CO., LTD.) 19 February 2021 (2021-02-19)<br> entire document | 1-12 |
| A | CN 110211570 A (BEIJING BAIDU NETCOM SCIENCE AND TECHNOLOGY CO., LTD.) 06 September 2019 (2019-09-06)<br> entire document | 1-12 |
| A | WO 2021179956 A1 (HUAWEI TECHNOGOLY CO., LTD.) 16 September 2021 (2021-09-16)<br> entire document | 1-12 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 January 2023** | **20 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/128836** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2018039623 A1 (HYPERCONNECT INC.) 08 February 2018 (2018-02-08)<br>entire document | 1-12 |

Form PCT/ISA/210 (second sheet) (January 2015)

**INTERNATIONAL SEARCH REPORT**
Information on patent family members

International application No.

**PCT/CN2022/128836**

| Patent document cited in search report | | | Publication date (day/month/year) | Patent family member(s) | | | Publication date (day/month/year) |
|---|---|---|---|---|---|---|---|
| CN | 107632980 | A | 26 January 2018 | CN | 107632980 | B | 27 October 2020 |
| CN | 108460027 | A | 28 August 2018 | None | | | |
| CN | 110705317 | A | 17 January 2020 | None | | | |
| CN | 112380837 | A | 19 February 2021 | None | | | |
| CN | 110211570 | A | 06 September 2019 | CN | 110211570 | B | 25 June 2021 |
| WO | 2021179956 | A1 | 16 September 2021 | CN | 113392653 | A | 14 September 2021 |
| US | 2018039623 | A1 | 08 February 2018 | JP | 2019533181 | A | 14 November 2019 |
| | | | | WO | 2018026200 | A1 | 08 February 2018 |
| | | | | KR | 101827773 | B1 | 09 February 2018 |
| | | | | EP | 3494489 | A1 | 12 June 2019 |
| | | | | EP | 3494489 | A4 | 25 March 2020 |
| | | | | US | 10824820 | B2 | 03 November 2020 |
| | | | | JP | 6987124 | B2 | 22 December 2021 |

Form PCT/ISA/210 (patent family annex) (January 2015)

**EP 4 401 001 A1**

**Patent documents cited in the description**

- CN 202111295358